# EUROPEAN PATENT APPLICATION

(11) **EP 4 801 092 A1**
(43) Date of publication of application: **02.09.2026**
(21) Application number: 23956333.1
(22) Date of filing: 24.10.2023
(51) Int. Cl.: H04W 24/02

(54) **MEASUREMENT CONFIGURATION METHOD AND DEVICE**

(71) Applicant: GUANGDONG OPPO MOBILE TELECOMMUNICATIONS CORP., LTD., Dongguan, Guangdong 523860 (CN)
(72) Inventor: LIU, Zhe, Dongguan, Guangdong 523860 (CN); LIU, Wendong, Dongguan, Guangdong 523860 (CN); ZHANG, Jinyu, Dongguan, Guangdong 523860 (CN)
(74) Representative: Mewburn Ellis LLP
(86) International application number: PCT/CN2023/126104
(87) International publication number: WO 2025/086078

(57) **Abstract**

The present application relates to a measurement configuration method and a device. The measurement configuration method comprises: a terminal device receives assistance information sent by a network device; and the terminal device performs measurement on the basis of the assistance information to obtain measurement data. The present disclosure can balance the resource overhead and positioning accuracy for measurement information interaction between devices.

## Description

### TECHNICAL FIELD

The present disclosure relates to the field of communications, and more particular, to a measurement configuration method and a device.

### BACKGROUND

In positioning scenarios, the more comprehensive the measurement data used for positioning, the higher the positioning precision. However, correspondingly, the more comprehensive the measurement data, the greater the resource overhead and higher the complexity of interacting the measurement data between devices. How to configure the measurement data of the terminal device for positioning is a technical problem that needs to be solved.

### SUMMARY

Embodiments of the present disclosure provide a measurement configuration method and a device, which may balance the resource overhead and positioning accuracy of interacting measurement information between devices.

The embodiments of the present disclosure provide a measurement configuration method, which includes:
receiving, by a terminal device, auxiliary information transmitted by a network device; and
performing, by the terminal device, measurement based on the auxiliary information, to obtain measurement data.

The embodiments of the present disclosure provide a measurement configuration method, which includes:
transmitting, by a network device, auxiliary information to a terminal device; where the auxiliary information is used to indicate the terminal device to perform measurement, to obtain measurement data.

The embodiments of the present disclosure provide a terminal device, which includes:
a first transceiving module, configured to receive auxiliary information transmitted by a network device; and
a processing module, configured to perform measurement based on the auxiliary information, to obtain measurement data.

The embodiments of the present disclosure provide a network device, which includes:
a second transceiving module, configured to transmit auxiliary information to a terminal device; where the auxiliary information is used to indicate the terminal device to perform measurement, to obtain measurement data.

The embodiments of the present disclosure provide a terminal device, which includes a processor and a memory. The memory is configured to store a computer program, and the processor is configured to call the computer program stored in the memory and run the computer program, to enable the terminal device to perform the above measurement configuration method.

The embodiments of the present disclosure provide a network device, which includes a processor and a memory. The memory is configured to store a computer program, and the processor is configured to call the computer program stored in the memory and run the computer programs, to enable the network device to perform the above measurement configuration method.

The embodiments of the present disclosure provide a chip, which is configured to implement the above measurement configuration method.

Specifically, the chip includes a processor, which is configured to a computer program from memory call and run the computer program, to enable a device equipped with the chip to perform the above measurement configuration method.

The embodiments of the present disclosure provide a computer-readable storage medium, which is configured to store a computer program, where the computer program, when run by a device, enables the device to perform the above measurement configuration method.

The embodiments of the present disclosure provide a computer program product, which includes computer program instructions, where the computer program instructions enable a computer to perform the above measurement configuration method.

The embodiments of the present disclosure provide a computer program, where the computer program, when run on a computer, enables the computer to perform the above measurement configuration method.

In the embodiments of the present disclosure, by configuring measurement data measured by a terminal device during a positioning process, resource overhead and positioning accuracy of the measurement data interacted between devices may be balanced.

### BRIEF DESCRIPTION OF THE DRAWINGS

FIG. 1 is a schematic diagram of a positioning method based on a downlink.
FIG. 2 is a schematic flowchart of a measurement configuration method 200 according to an embodiment of the present disclosure.
FIG. 3 is a schematic flowchart of a measurement configuration method 300 according to an embodiment of the present disclosure.
FIG. 4 is a flowchart of implementation of Embodiment 1 of the present disclosure.
FIG. 5 is a flowchart of implementation of Embodiment 2 of the present disclosure.
FIG. 6 is a flowchart of implementation of Embodiment 3 of the present disclosure.
FIG. 7 is a schematic block diagram of a terminal device 700 according to an embodiment of the present disclosure.
FIG. 8 is a schematic block diagram of a network device 800 according to an embodiment of the present disclosure.
FIG. 9 is a schematic structural diagram of a communication device 900 according to the embodiments of the present disclosure.
FIG. 10 is a schematic structural diagram of a chip 1000 according to the embodiments of the present disclosure.
FIG. 11 is a schematic block diagram of a communication system 1100 according to the embodiments of the present disclosure.

### DETAILED DESCRIPTION

Technical solutions in the embodiments of the present disclosure will be described with reference to the accompanying drawings in the embodiments of the present disclosure.

The technical solutions of the embodiments of the present disclosure may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial communication network (non-terrestrial network, NTN) system, a universal mobile telecommunication system (UMTS), a wireless local area network (WLAN), wireless fidelity (WiFi), a 5th-generation (5G) communication system, and other communication systems.

Generally speaking, traditional communication systems support a limited number of connections, which is easy to be implemented. However, with the development of the communication technology, mobile communication systems will not only support traditional communications, but also support, for example, device to device (D2D) communication, machine to machine (M2M) communication, machine type communication (MTC), vehicle to vehicle (V2V) communication, or vehicle to everything (V2X) communication. The embodiments of the present disclosure may be applied to these communication systems as well.

In an implementation, the communication system in the embodiments of the present disclosure may be applied to a carrier aggregation (CA) scenario, and a dual connectivity (DC) scenario, and may also be applied to a standalone (SA) network deployment scenario.

In an implementation, the communication system in the embodiments of the present disclosure may be applied to an unlicensed spectrum, where the unlicensed spectrum may also be considered as a shared spectrum. Alternatively, the communication system in the embodiments of the present disclosure may be applied to a licensed spectrum, where the licensed spectrum may be considered as an unshared spectrum.

In the embodiments of the present disclosure, various embodiments are described in conjunction with a network device and a terminal device. The terminal device may be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (ST) in the WLAN, which may be a cellular phone, a cordless phone, a session initiation protocol (SIP) phone, a wireless local loop (WLL) station, a personal digital assistant (PDA) device, a handheld device with a wireless communication function, a computing device or other processing devices connected to a wireless modem, an in-vehicle device, a wearable device, a terminal device in a next generation communication system (e.g., an NR network), a terminal device in a future evolved public land mobile network (PLMN) network, or the like.

In the embodiments of the present disclosure, the terminal device may be deployed on land, including indoor or outdoor, handheld, wearable, or in-vehicle; the terminal device may also be deployed on water (e.g., on a steamship); and the terminal device may also be deployed in air (e.g., on an airplane, on a balloon, or on a satellite).

In the embodiments of the present disclosure, the terminal device may be a mobile phone, a pad, a computer with a wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

As an example but not a limitation, in the embodiments of the present disclosure, the terminal device may be a wearable device. The wearable device may be referred to as a wearable smart device, which is a general term for wearable devices developed by performing the intellectualized design on daily wear by applying wearable technologies, such as glasses, gloves, watches, clothing and shoes. The wearable device is a portable device that is worn directly on a body, or integrated into clothes or accessories of users. The wearable device not only is a hardware device, but also implements powerful functions by software support as well as data interaction or cloud interaction. Generalized wearable smart devices include devices that are fully functional, large in size, and capable of implementing full or partial functions without relying on smart phones, such as smart watches or smart glasses, as well as devices that only focus on a certain type of application function and need to be used in conjunction with other devices (e.g., a smart phone), such as various smart bracelets and smart jewelry that monitor physical signs.

In the embodiments of the present disclosure, the network device may be a device used for communicating with a mobile device. The network device may be an access point (AP) in WLAN, a base station (BTS) in GSM or CDMA, a base station (NodeB, NB) in WCDMA, an evolutional Node B (eNB or eNodeB) in LTE, a relay station or an access point, an in-vehicle device, a wearable device, a network device (gNB) in an NR network, a network device in a future evolved PLMN network, a network device in an NTN network, or the like.

As an example but not a limitation, in the embodiments of the present disclosure, the network device may have mobile characteristics. For example, the network device may be a device which is mobile. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may be a base station deployed on land, water, or other places.

In the embodiments of the present disclosure, the network device may provide services for a cell, and the terminal device communicates with the network device through a transmission resource (e.g., a frequency-domain resource or a spectrum resource) used by the cell. The cell may be a cell corresponding to the network device (e.g., a base station), and the cell may belong to a macro base station, or may belong to a base station corresponding to a small cell. The small cell here may include: a metro cell, a micro cell, a pico cell, a femto cell, or the like. These small cells have characteristics of small coverage ranges and low transmission power, which are applicable for providing a data transmission service with high speed.

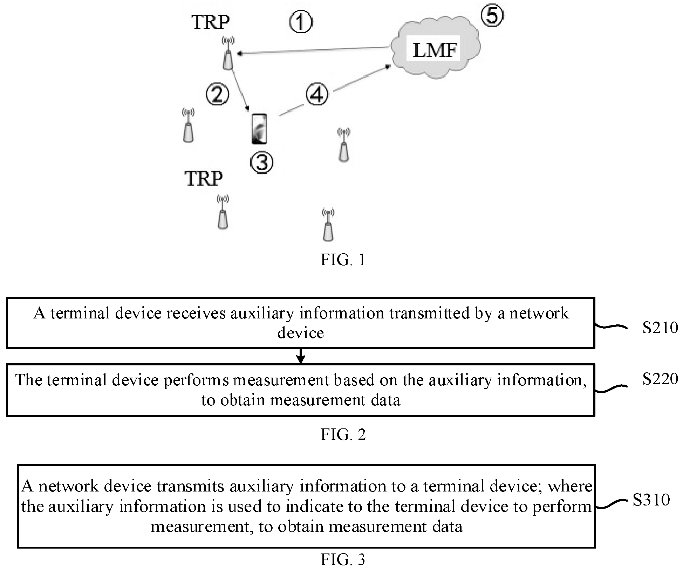

It should be understood that, in the embodiments of the present disclosure, a device with a communication function in the network/system may be referred to as a communication device. Considering the communication system illustrated in FIG. 1 as an example, the communication device may include a network device and a terminal device that have a communication function. The network device and the terminal device may be the specific devices in the embodiments of the present disclosure, which will not be repeated here. The communication device may further include other devices in the communication system, such as a network controller, a mobility management entity, and other network entities, which are not limited in the embodiments of the present disclosure.

It should be understood that the terms "system" and "network" are often used interchangeably herein. The term "and/or" herein is only an association relationship for describing associated objects, indicating that there may be three kinds of relationships. For example, "A and/or B" may represent the following three cases where: A exists alone, both A and B exist, and B exists alone. In addition, a character "/" herein generally indicates that the associated objects before and after this character are in an "or" relationship.

It should be understood that, "indicate" mentioned in the embodiments of the present disclosure may mean a direct indication, an indirect indication, or may mean that there is an association relationship. For example, A indicating B may mean that A directly indicates B, and for example, B may be acquired by A; alternatively, A indicating B may mean that A indirectly indicates B, and for example, A indicates C, and B may be acquired by C; alternatively, A indicating B may mean that there is an association relationship between A and B.

In the description of the embodiments of the present disclosure, the term "correspond" may mean that there is a direct correspondence or an indirect correspondence between the two, or may mean that there is an association relationship between the two, or may mean a relationship of indicating and being indicated, or a relationship of configuring and being configured, or the like.

To facilitate understanding of the technical solutions of the embodiments of the present disclosure, the related technologies of the embodiments of the present disclosure are described below. The following related technologies, as optional solutions, may be arbitrarily combined with the technical solutions of the embodiments of the present disclosure, and those combined solutions all belong to the protection scope of the embodiments of the present disclosure.

### I. Positioning method

Positioning methods may be classified as follows.
(1) UE-based positioning method. In this method, a UE directly calculates a location of a target UE.
(2) Terminal-assisted (UE-assisted) positioning method/location management function (LMF)-based positioning method. In these methods, a terminal reports measurement data to an LMF, and the LMF calculates a location of a target UE based on collected measurement data.
(3) Next generation radio access network (NG-RAN) node assisted positioning method. In this method, a base station reports measurement data of a transmission/reception point (TRP) to an LMF, and the LMF calculates a location of a target UE based on collected measurement data.

In the positioning methods, for different methods, the UE or the LMF may estimate the location of the terminal device by using algorithms such as a Chan algorithm and a Taylor expansion.

To support various positioning methods, the NR system introduces a positioning reference signal (PRS) in a downlink (DL) and a sounding reference signal (SRS) for positioning in an uplink (UL).

NR-based positioning function mainly involves three parts: UE, multiple TRPs, and a location server.

Here, multiple network TRPs may include multiple TRPs around the UE, where these TRPs participate in cellular positioning. In some cases, a base station may be a single TRP; in other cases, a single base station may have multiple TRPs.

The location server is responsible for the entire location process, and the location server often includes the LMF.

Positioning methods for a DL may be classified into two main types, which includes the following.
(1) UE-assisted positioning method. In this method, the UE is responsible for measuring measurement data required for positioning and reporting the measurement data to a network side; and the network side performs positioning based on the measurement data reported by the UE, that is, the network side calculates the location of the UE.
(2) UE-based positioning method. In this method, the UE is responsible for measuring measurement data required for positioning and performing positioning based on the measurement data, that is, the UE calculates the location of the UE.

FIG. 1 is a schematic diagram of a positioning method based on a downlink. This positioning method adopts the UE-assisted positioning method, which includes the following steps.

In step 1, a LMF notifies a TRP of a related configuration. The related configuration may include one or more of: configuration information of a PRS, or a type of measurement data that the UE needs to report.

In step 2, the TRP transmits the PRS.

In step 3, a UE receives the PRS and measures the PRS to obtain measurement data. For different positioning methods, the measurement data that the UE needs to measure are different.

In step 4, the UE feeds back the measurement data to the LMF.

In step 5, the LMF calculates the location of the UE based on the measurement data.

The UE-assisted positioning method is introduced above. The UE-based positioning method may include the following steps.

The steps 1 to 3 are the same as steps 1 to 3 in the UE-assisted positioning method illustrated in FIG. 1.

In step 4, a terminal calculates the location of the UE based on the measurement data.

Since location information of the TRP is required when performing location calculation, in UE-based positioning method, the network side needs to notify the UE of the location information of the TRP in advance.

### II. Positioning method combining artificial intelligence/machine learning (AI/ML) and positioning technology

To further improve positioning accuracy, a positioning method combining the AI/ML with positioning technology is begun to discuss in the related art. This method deploys a neural network model on a UE, a gNB, or a network side and performs positioning calculation based on measurement data by using the neural network model. The neural network model may also be referred to as an AI/ML model. The neural network model is a computational model consisting of multiple interconnected neuron nodes. A connection between nodes represents a weighted value from an input signal to an output signal, called weights. Each node performs a weighted summation on different input signals, and outputs results through a specific activation function. A neural network includes multiple layers, such as an input layer, hidden layers, and an output layer. Each layer includes multiple neurons. Through different connection manners, weights, and activation functions of these neurons, different outputs may be generated, thereby fitting mapping relationships from input to output.

Positioning methods combining the neural network model with positioning techniques may have the following possible cases.

In case 1, UE-based positioning method in which a neural network model is deployed on the UE side. In this method, the UE measures a reference signal (e.g., a PRS) to obtain measurement data, and then input the measurement data into a neural network model. The neural network model determines the location of the UE based on the measurement data. Here, the neural network model may be pre-trained on the UE side or pre-trained on the LMF side, and the LMF will transmit the trained neural network model to the UE.

In case 2, UE-assisted positioning method/LMF-based positioning method in which a neural network model is deployed on the UE side. In this method, the UE measures a reference signal (e.g., a PRS) to obtain measurement data, and then inputs the measurement data into a neural network model. The neural network model obtains a positioning intermediate result (e.g., time of arrival (TOA), line of sight (LOS), non-line of sight (NLOS)) based on the measurement data, and transmits the positioning intermediate result to the LMF; the LMF then determines the location of the UE based on the positioning intermediate result. The neural network model may be pre-trained on the UE side or pre-trained on the LMF side, and the LMF will transmit the trained neural network model to the UE.

In case 3, UE-assisted positioning method/LMF-based positioning method in which a neural network model is deployed on the LMF side. In this method, the UE measures a reference signal (e.g., a PRS) to obtain measurement data, and transmits the measurement data to the LMF; the LMF inputs the received measurement data into a neural network model, and the neural network model determines the location of the UE based on the measurement data. The neural network model may be pre-trained on the LMF side.

In case 4, NG-RAN node-assisted positioning method in which a neural network model is deployed on the gNB side.

In case 5, NG-RAN node-assisted positioning method in which a neural network model is deployed on the LMF side.

### III. Measurement data in positioning technology

In traditional positioning methods, as well as positioning methods combining AI/ML technology with positioning technology, there are various possible measurement data. For example, there are various possible types of measurement data, such as channel impulse response (CIR), power delay profile (PDP), delay profile (DP). The resource overheads required to report different measurement data, and the impact of different measurement data on positioning accuracy are different.

In positioning scenarios, the more comprehensive the measurement data used for positioning, the higher the positioning precision. However, correspondingly, the more comprehensive the measurement data, the greater the resource overhead and higher the complexity of interacting the measurement data between devices. For example, CIR data includes the most information, so positioning by using the CIR data is more accurate. However, compared to other types of measurement data, transmitting CIR data incurs greater resource overhead and is more complex.

In addition, in actual positioning scenarios, in a case where channel conditions between the UE and certain TRPs are relatively poor, the measurement data between the UE and these TRPs does not need to be collected, and the measurement data obtained by measuring the PRS transmitted by these TRPs is of little use.

As shown in table 1, a training set includes 80,000 pieces of data. Each of which represents a measurement result of the UE for 18 TRPs or a measurement result of the UE for 4 TRPs. The table 1 shows the impact of the number of TRPs on positioning precision. It may be seen that the number of TRPs decreased significantly (from 18 to 4), but the positioning precision did not decrease much (from 0.39 meters to 0.62 meters, or from 0.33 meters to 0.5 meters), and remained within 1 meter.

**Table 1**

| Positioning precision (m) | 18 TRPs | 4 TRPs with indexes [3, 7, 11, 15] |
|---|---|---|
| The clutter setting {40%, 2, 2} | 0.39 m | 0.62 m |
| The clutter setting {60%, 6, 2} | 0.33 m | 0.50 m |

Furthermore, for the same type of measurement data, differences in measurement size also affect the resource overhead of reporting the measurement data. Taking CIR information as an example, different measurement sizes have a linear impact on the resource overhead of reporting the CIR information, but the positioning error may still be kept within a certain range.

As may be seen from the above examples, the positioning precision differs when different measurement data are used for positioning, and the resource overhead and complexity of interacting different measurement data between devices are different. The present disclosure proposes a measurement configuration method, used for configuring measurement data for a terminal device to perform measurement during positioning, thereby balancing the resource overhead and positioning accuracy of measurement information interacted between devices.

To facilitate understanding of the technical solutions of the embodiments of the present disclosure, the related technologies of the embodiments of the present disclosure will be described below. The following related technologies are optional solutions and may be arbitrarily combined with the technical solutions of the embodiments of the present disclosure, which all fall within the protection scope of the embodiments of the present disclosure.

FIG. 2 is a schematic flowchart of a measurement configuration method 200 according to an embodiment of the present disclosure. The method may optionally be applied to a system illustrated in FIG. 1, but is not limited thereto. The method includes at least some of the following content.

In S210, a terminal device receives auxiliary information transmitted by a network device.

In S220, the terminal device performs measurement based on the auxiliary information, to obtain measurement data.

Here, the measurement data may be used for positioning of the terminal device. For example, the terminal device determines a location of the terminal device by using the measurement data; alternatively, the terminal device reports the measurement data to the network device, which then uses the measurement data to determine the location of the terminal device.

Here, the network device may include an LMF or an access device.

For example, the network device is the LMF, which transmits the auxiliary information to the terminal device via an LTE positioning protocol (LPP). In this manner, existing protocol processes may be reused.

As another example, the network device may include the access device, such as a base station; the access device transmits the auxiliary information to terminal devices via a radio resource control (RRC) protocol. Transmitting the auxiliary information via the RRC protocol may reduce the transmission latency of the auxiliary information.

The auxiliary information may be used to indicate the terminal device to perform data measurement during the positioning process, such as configuring a type, a size, a path, and a format of the measurement data.

Furthermore, the terminal device may transmit one or more of the following to the network device based on the auxiliary information:
the measurement data;
a positioning intermediate result determined by using the measurement data; or
a label corresponding to the measurement data.

Here, the positioning intermediate result may include an intermediate result used for positioning the terminal device, such as an intermediate result used for determining the location of the terminal device.

In an example, during the positioning process, the terminal device collects the measurement data and performs positioning by using the measurement data, that is, to determine the location of the terminal device. Here, the neural network model used for positioning is deployed on the terminal device, and the terminal device determines, based on the measurement data, the location of the terminal device by using the neural network model. Alternatively, the neural network model is not deployed on the terminal device. After collecting the measurement data, the terminal device may determine the location of the terminal device by using the measurement data.

In an example, during the positioning process, the terminal device transmits the measurement data to the network device, and the network device may perform positioning by use the measurement data, that is, determining the location of the terminal device. Here, a neural network model used for positioning may be deployed on the network device, and the network device determines, based on the measurement data, the location of the terminal device by using this neural network model. During the training of the neural network model, the terminal device may transmit the measurement data and the label corresponding to the measurement data (the label may be the location of the terminal device) to the network device, and the network device trains the neural network model by using the measurement data and the label. Alternatively, the terminal device may transmit the measurement data to the network device, the network device determines the label corresponding to the measurement data (the label may be the location of the terminal device), and trains the neural network model by using the measurement data and the label. Alternatively, in a case where a semi-supervised training method is used, the terminal device may transmit the measurement data to the network device, and the network device trains the neural network model by using the measurement data. Alternatively, the neural network model may not be deployed on the network device, instead, after receiving the measurement data, the network device determines the location of the terminal device by using the measurement data.

In an example, the neural network model used for positioning is deployed on the terminal device. During the positioning process, the terminal device collects the measurement data, determines, based on the measurement data, the positioning intermediate result by using the neural network model, and transmits the positioning intermediate result to the network device and the network device determines the location of the terminal device by using the positioning intermediate result. The neural network model may be pre-trained by the terminal device or the network device. In a case where the neural network model is pre-trained by the network device, during the training process, the terminal device may transmit the measurement data and the label corresponding to the measurement data (the label may be the positioning intermediate result, such as one or more of: the TOA, the LOS, or the NLOS) to the network device, and the network device trains the neural network model by using the measurement data and the label. Alternatively, the terminal device may transmit the measurement data to the network device, the network device determines the label corresponding to the measurement data, and trains the neural network model by using the measurement data and label. Alternatively, in a case where a semi-supervised training method is used, the terminal device may transmit the measurement data to the network device, and the network device trains the neural network model by using the measurement data.

In some implementations, the auxiliary information includes one or more of:
(1) configuration information of the measurement data;
(2) configuration information of the locating intermediate result;
(3) configuration information of a reference signal;
(4) precision;
(5) cell information;
(6) a first time interval; or
(7) a quality threshold.

The auxiliary information may be used for configuring processes such as terminal device measurement, reporting measurement data, and reporting a positioning intermediate result.

The above various types of the auxiliary information are introduced below.

### I. The configuration information of the measurement data.

The configuration information of the measurement data may include one or more of: measurement type information, a measurement size, measurement path information, or measurement format information.

Here, the measurement type information may include one or more of: measurement delay, phase, power, CIR, PDP, DP, reference signal received power (RSRP), or reference signal received path power (RSRPP). For example, in a case where the measurement type information included in the auxiliary information transmitted by the network device to the terminal device is a CIR type, the terminal device may measure the CIR based on the auxiliary information and transmit CIR data obtained through measurement to the network device; and the network device may determine the location of the terminal device by using the CIR.

The measurement size may include one or more of: a number of time domain samples, a number of frequency domain samples, a number of spatial domain samples, or a number of code domain samples. For example, the number of time domain samples may be 256, 128, 64, 32, 16, 8, or the like. For example, in a case where the number of time domain samples included in the auxiliary information transmitted by the network device to the terminal device is 256, the terminal device may measure measurement data with the number of time domain samples being 256 based on the auxiliary information and transmit the measurement data to the network device; and the network device may determine the location of the terminal device by using the measurement data.

The measurement path information may include one or more of: power of a first path, delay of a first path, carrier phase of a first path, carrier phase difference of a first path, antenna subcarrier phase difference of a first path, antenna subcarrier phase of a first path, power of multipath, delay of multipath, carrier phase of multipath, carrier phase difference of multipath, antenna subcarrier phase difference of multipath, or antenna subcarrier phase of multipath. For example, in a case where the measurement path information included in the auxiliary information transmitted by the network device to the terminal device is the delay of the first path, the terminal device may measure delay data of the first path based on the auxiliary information and transmit the delay data of the first path to the network device; and the network device may determine the location of the terminal device by using the delay data of the first path.

The measurement format information may include one or more measurement formats, and one or more of the following corresponding to different measurement formats are different: a measurement type, measurement overhead, cell information, a measurement size, or precision. For example, two measurement formats are predefined, which includes a first measurement format and a second measurement format. A measurement type corresponding to the first measurement format is the CIR, and a measurement type corresponding to the second measurement format is the PDP. In addition to corresponding measurement types, different measurement formats may also correspond to different measurement sizes, different pieces of measurement path information, different precisions, different pieces of cell information, or the like. The reporting signaling overhead is not exactly the same for different measurement formats.

In a case where the configuration information of the measurement data includes measurement format information, there is no need to configure the other three pieces of information, that is, the measurement type information, the measurement size, and the measurement path information. The terminal device may report, according to different measurement formats configured by the network device, measurement data that meets the configuration of measurement type information, a measurement size, and measurement path information corresponding to the measurement format, so that the reported measurement data meets different positioning precisions and reporting signaling overhead.

### II. The configuration information of the positioning intermediate result.

The configuration information of the positioning intermediate result may include intermediate result type information; for example, the intermediate result type information may include one or more of: a reference signal time difference (RSTD) measurement result, a round trip delay (RTD) measurement result, an angle of arrival (AOA) measurement result, an angle of departure (AOD) measurement result, RSRP, multipath measurement information, LOS indication information, NLOS indication information, or a TOA measurement result.

A neural network model may be pre-deployed in the terminal device. After the terminal device obtains the measurement data, the neural network model may obtain the positioning intermediate result based on the measurement data, and report the corresponding positioning intermediate result to the network device based on the auxiliary information and the configuration information of the positioning intermediate result. For example, in a case where the configuration information of the positioning intermediate result included in the auxiliary information is the RSTD measurement result, the terminal device reports the RSTD measurement result to the network device based on the configuration information; the network device may then determine the location of the terminal device by using the RSTD measurement result.

### III. The configuration information of the reference signal.

The configuration information of the reference signal may include configuration information of a PRS. The configuration information of the PRS may include one or more of: resource set information of the PRS, or a resource configuration of the PRS.

The terminal device may measure the PRS based on the configuration information of reference signal, to obtain the measurement result.

### IV. The precision.

The precision may include one or more of: target positioning precision or target measurement precision.

In some implementations, precision may include one or more target measurement precisions configured for specific measurement data. For example, in a case where the measurement type information in the configuration information of the measurement data is the CIR, the precision is the precision in a case of measuring the CIR; the terminal device measures the CIR based on the auxiliary information, and the measurement precision meets the precision configured in the auxiliary information. In a case where the measurement type information in the configuration information of the measurement data is the PDP, the precision is the precision in a case of measuring the PDP, and so on. In a case where the configuration information of the measurement data includes multiple types of measurement type information, the precision includes the target measurement precision configured for each measurement type.

In some implementations, the target positioning precision is a limitation on positioning error configured by the network device. For example, in a case where the target positioning precision is 1 meter, the estimation error of the location of the terminal device needs to be within 1 meter.

### V. The cell information.

In some implementations, the cell information includes one or more of:
identification information for one or more cells;
identification information of one or more access devices;
TRP information; or
cell list information.

Here, the TRP information may include one or more of: a number of TRPs, a TRP index, or a TRP location.

Performing, by the terminal device, measurement based on the auxiliary information may include: performing, by the terminal device, measurement by using the TRP information.

For example, the cell information may include three predefined TRPs, and the terminal device may measure these three TRPs indicated by the cell information, to obtain the measurement data. In this way, the terminal device may measure only reference signals transmitted by some of the TRPs based on configuration of the network device, thereby reducing measurement overhead of the terminal device and signaling overhead when reporting measurement data. Channel conditions between the terminal device and some TRPs are relatively poor. The cell information in the auxiliary information may not include information about these TRPs. Therefore, the terminal device does not need to collect measurement data between the terminal device and these TRPs, and the impact on positioning precision is not significant.

In some implementations, the number of TRPs and/or the TRP index are determined based on one or more of: target positioning precision or a model condition of the neural network model; where the neural network model is used for performing positioning by using measurement data, or determining the positioning intermediate result by using measurement data. The neural network model may be deployed on the terminal device or the network device.

In an example, the model condition is classified based on one or more of: model complexity or computational complexity.

In some implementations, the number of TRPs and/or the TRP index are determined based on one or more of: a capability of the terminal device or a model condition of the neural network model; where the neural network model is used for performing positioning by using the measurement data, or determining the positioning intermediate result by using measurement data. The neural network model may be deployed on the terminal device or the network device.

In an example, the capability of the terminal device includes one or more of: TRP information supported by the terminal device or the moving speed of the terminal device. The terminal device may transmit the capability of the terminal device to the network device in advance, to enable the network device to determine the number of TRPs and/or the TRP index based on the capability of the terminal device.

In some implementations, the TRP information may be associated with a reference signal configuration. For example, in a case where the reference signal is a PRS, the TRP information is associated with a configuration parameter related to the reference signal. For example, the TRP information is associated with a PRS configuration corresponding to a specific positioning frequency layer, a configuration of a PRS resource set, or a configuration of a PRS resource.

### VI. The first time interval.

The first time interval may include a time window in which the network device collects the measurement data and/or a time window in which the terminal device measures the measurement data.

For example, performing, by the terminal device, measurement based on the auxiliary information includes: performing, by the terminal device, measurement on the reference signal within the first time interval.

Specifically, a timestamp of the measurement data of the terminal device is within the first time interval, and a timestamp of the label corresponding to the measurement data is within the first time interval. In this way, it may be ensured that in a case where the network device collects measurement data from multiple terminal devices, measurement data from each terminal device is obtained by measuring within the same time period, so that measurement is performed under the same condition; and it may be ensured that the measurement data and the label corresponding to the measurement data are obtained within the same time period, thereby ensuring the effect of model training.

### VII. The quality threshold.

In some implementations, the quality threshold includes one or more of: a measurement quality threshold or a label quality threshold.

Transmitting, by the terminal device, the measurement data to the network device includes: in a case where quality of the measurement data is higher than or equal to the measurement quality threshold, transmitting, by the terminal device, the measurement data.

Transmitting, by the terminal device, the label corresponding to the measurement data to the network device includes: in a case where quality of the label corresponding to the measurement data is higher than or equal to the label quality threshold, transmitting, by the terminal device, the label corresponding to the measurement data.

Through the quality threshold, measurement data and/or the label that meets the requirements may be selected and reported, which reduces the resource overhead required for reporting the measurement data and/or . Furthermore, high-quality measurement data is conducive to ensuring the accuracy of positioning.

The above describes the various pieces of information that may be included in the auxiliary information. The terminal device may collect and report measurement data by using use the auxiliary information configured for the terminal device by the network device. Based on the various pieces of information included in the auxiliary information, the terminal device collects and reports measurement data that meets the various pieces of information. The various pieces of information in the auxiliary information may be combined arbitrarily. For example, the auxiliary information includes the measurement type information, the measurement precision, the cell information, and the first time interval; where the measurement type information is the CIR; the measurement precision is the precision in a case of measuring the CIR; the cell information is indexes of 3 TRPs, which includes TRP 1, TRP 2, and TRP 3. Then, based on the auxiliary information, the terminal device may measure the CIR data of TRP 1, TRP 2, and TRP 3 within the first time interval, and perform measurement based on the measurement precision indicated in the auxiliary information.

In some implementations, performing, by the terminal device, measurement based on the auxiliary information includes: performing, by the terminal device, measurement based on one or more of: the configuration information of the measurement data, the cell information, the quality threshold, or the precision; and/or; determining, by the terminal device, measurement data to be transmitted by using one or more of: the configuration information of the measurement data or the quality threshold.

Regarding the manner by which the terminal device receives the auxiliary information, the terminal device may receive the auxiliary information periodically transmitted by the network device; alternatively, the terminal device may receive the auxiliary information that is transmitted by the network device in a case where a triggering condition is met. In other words, the network device may periodically transmit the auxiliary information to the terminal device, or the network device may transmit the auxiliary information to the terminal device in a case of the triggering condition is met; the terminal device performs measurement based on the auxiliary information received from the network device.

In some implementations, performing, by the terminal device, measurement based on the auxiliary information includes: performing, by the terminal device, measurement based on the auxiliary information within a second time interval.

Here, the second time interval may be received by the terminal device from the network device, or the second time interval may be determined by the terminal device based on a timer received from the network device. In some embodiments, the measurement configuration method proposed in the embodiments of the present disclosure further includes: receiving, by the terminal device, the second time interval from the network device; and/or receiving, by the terminal device, a timer from the network device; and determining, by the terminal device, the second time interval based on the timer.

In some implementations, the auxiliary information received by the terminal device may further include the second time interval and/or the timer.

A value of the second time interval may be the same as or different from a value of the first time interval. In a case where the value of the second time interval is the same as the value of the first time interval, the auxiliary information only needs to include one piece of time interval information which represents both the first time interval and the second time interval.

In addition, in the measurement configuration method proposed in the embodiments of the present disclosure, before the terminal device receives the auxiliary information transmitted by the network device, the method may further include: transmitting, by the terminal device, a capability of the terminal device to the network device; where the capability of the terminal device is used for determining the auxiliary information. In this way, based on the capability of the terminal device, the network device may set auxiliary information that matches the capability of the terminal device for the terminal device, and configure the auxiliary information to the terminal device, to enable the terminal device to perform measurement based on the auxiliary information.

The capability of the terminal device includes one or more of: a measurement type supported by the terminal device, a measurement size supported by the terminal device, a number of measurement paths supported by the terminal device, a measurement format supported by the terminal device, or a value of a first time interval supported by the terminal device.

In the method proposed in the embodiments of the present disclosure, the measurement data reported by the terminal device to the network device may be used for determining the location of the terminal device during the positioning process, the measurement data may also be used by the network device in the training process of the neural network model used for positioning, where the trained neural network model may be deployed on the network device or the terminal device. In a case where the neural network model is deployed on the terminal device, the network device may transmit the trained neural network model to the terminal device. Accordingly, the terminal device receives the neural network model, the neural network model is obtained through training using the measurement data.

The embodiments of the present disclosure further propose a measurement configuration method. FIG. 3 is a schematic flowchart of a measurement configuration method 300 according to an embodiment of the present disclosure. The method may be applied optionally to a system illustrated in FIG. 1, but is not limited thereto. The method includes at least some of the following, which includes following steps.

In S310, a network device transmits auxiliary information to a terminal device; where the auxiliary information is used to indicate the terminal device to perform measurement, to obtain measurement data.

Here, the network device may include an LMF or an access device.

In some implementations, the method further includes: receiving, by the network device, one or more of the following transmitted from the terminal device:
the measurement data;
a positioning intermediate result determined by using the measurement data; or
a label corresponding to the measurement data.

In some implementations, the label corresponding to the measurement data may include one or more of: a location of the terminal device, TOA, LOS, or NLOS.

In some implementations, the auxiliary information includes one or more of:
configuration information of the measurement data;
configuration information of the positioning intermediate result;
configuration information of a reference signal;
precision;
cell information;
a first time interval; or
a quality threshold.

The auxiliary information may be used for configuring processes such as terminal device measurement, reporting measurement data, and reporting a positioning intermediate result.

In some implementations, the configuration information of the measurement data in the auxiliary information may include one or more of: measurement type information, a measurement size, measurement path information, or measurement format information.

The measurement type information may include one or more of: measurement delay, phase, power, CIR, PDP, DP, RSRP, or RSRPP.

In some implementations, the measurement size includes one or more of: a number of time domain samples, a number of frequency domain samples, a number of spatial domain samples, or a number of code domain samples.

In some implementations, the measurement path information includes one or more of: power of a first path, delay of a first path, carrier phase of a first path, carrier phase difference of a first path, antenna subcarrier phase difference of a first path, antenna subcarrier phase of a first path, power of multipath, delay of multipath, carrier phase of multipath, carrier phase difference of multipath, antenna subcarrier phase difference of multipath, or antenna subcarrier phase of multipath.

In some implementations, the measurement format information includes one or more measurement formats, and one or more of the following corresponding to different measurement formats are different: a measurement type, measurement overhead, cell information, a measurement size, or precision.

In some implementations, the configuration information of the positioning intermediate result includes intermediate result type information; and
the intermediate result type information includes one or more of: a RSTD measurement result, an RTD measurement result, an AOA measurement result, an AOD measurement result, RSRP, multipath measurement information, LOS indication information, NLOS indication information, or a TOA measurement result.

In some implementations, the configuration information of the reference signal includes configuration information of a PRS. The configuration information of the PRS may include one or more of: resource set information of the PRS, or a resource configuration of the PRS.

In some implementations, the precision includes one or more of: target positioning precision or target measurement precision.

For example, the precision may include one or more target measurement precisions configured for specific measurement data. Different target measurement precisions may be configured for different measurement data.

In some implementations, the cell information includes one or more of:
identification information for one or more cells;
identification information of one or more access devices;
TRP information; or
cell list information.

The TRP information may include one or more of: a number of TRPs, a TRP index or a TRP location.

In some implementations, the number of TRPs and/or the TRP index are determined based on one or more of: target positioning precision or a model condition of a neural network model;
where the neural network model is used for performing positioning by using the measurement data, or determining the positioning intermediate result by using the measurement data.

The neural network model may be deployed on the network device or the terminal device.

In some implementations, the model condition is classified based on one or more of: model complexity or computational complexity.

In some implementations, the number of TRPs and/or the TRP index are determined based on one or more of: a capability of the terminal device or a model condition of a neural network model; where the neural network model is used for performing positioning by using measurement data, or determining the positioning intermediate result by using measurement data.

The capability of the terminal device includes one or more of: TRP information supported by the terminal device or moving speed of the terminal device.

The network device may receive capability information transmitted by the terminal device in advance, and then determine the number of TRPs and/or the TRP index based on the capability information of the terminal device.

In some implementations, the TRP information is carried in the configuration information of the reference signal.

In some implementations, the first time interval includes a time window in which the network device collects the measurement data and/or a time window in which the terminal device measures the measurement data.

In some implementations, the quality threshold includes one or more of: a measurement quality threshold or a label quality threshold. The measurement quality threshold and the label quality threshold may be used by the terminal device to filter data in a case of reporting the measurement data or the label. For example, in a case where the quality of the measurement data is higher than or equal to the measurement quality threshold, the terminal device transmits the measurement data; and/or, in a case where the quality of the label corresponding to the measurement data is higher than or equal to the label quality threshold, the terminal device transmits the label corresponding to the measurement data.

The network device may indicate the terminal device to measure and report measurement data based on the indication of the auxiliary information through transmitting the auxiliary information including the above various pieces of information to the terminal device, thereby realizing the measurement configuration used for positioning. So that the measurement data or the positioning intermediate result reported by the terminal device may not only meet the requirement of the positioning precision, but also reduce the resource overhead and complexity as much as possible when reporting the data.

In some implementations, the network device may periodically transmit the auxiliary information to the terminal device; or
the network device transmits the auxiliary information to the terminal device in a case where a triggering condition is met.

In some implementations, the network device may further transmit a second time interval and/or a timer to the terminal device, which is used to indicate the terminal device to perform measurement within the second time interval. The second time interval and/or the timer may be carried in the auxiliary information or in other information. For example, the auxiliary information may further include the second time interval and/or the timer.

A value of the second time interval may be the same as or different from a value of the first time interval. In a case where the value of the second time interval is the same as the value of the first time interval, the auxiliary information may include only one piece of time interval information, the time interval information is used for representing both the first time interval and the second time interval.

In some implementations, the network device may train a neural network model used for positioning calculation by using the measurement data received from the terminal device. Furthermore, the network device may transmit the neural network model to the terminal device, and the neural network model is obtained through training using the measurement data.

In addition, in some embodiments, before the network device transmits the auxiliary information to the terminal device, the method may further include: transmitting, by the network device, a capability of the terminal device from the terminal device; where the capability of the terminal device is used for determining the auxiliary information.

Here, the capability of the terminal device includes one or more of: a measurement type supported by the terminal device, a measurement size supported by the terminal device, a number of measurement paths supported by the terminal device, a measurement format supported by the terminal device, or a value of a first time interval supported by the terminal device.

For a specific example of the network device performing method 300 in the embodiments, the related description of example of the network device in the above method 200 may be referred to, which will not be repeated here for the sake of brevity.

The present disclosure will be described in detail with reference to the accompanying drawings and specific embodiments.

### Embodiment 1.

In this embodiment, a neural network model is not used for positioning. A network device transmits auxiliary information to a terminal device, where the auxiliary information is used to configure measurement data reported by the terminal device; the terminal device performs measurement based on the auxiliary information and transmits the measurement data to the network device; and the network device determines a location of the terminal device by using the measurement data. Alternatively, the terminal device may perform positioning measurement based on the auxiliary information, estimate the location of the terminal device by using the obtained measurement data, and transmit the location of the terminal device to the network device.

Before transmitting the auxiliary information, the network device may receive a capability of the terminal device and determine the auxiliary information based on the capability of the terminal device. In an example, the capability of the terminal device may include a measurement type, a measurement size, measurement path information, a measurement format in the configuration information of the measurement data. In another example, the capability of the terminal device may include configurations related to a first time interval supported by the terminal device, such as a size and a period of the first time interval. Here, the configuration information of the measurement data and the first time interval belong to content of the auxiliary information. The auxiliary information is introduced in detail below.

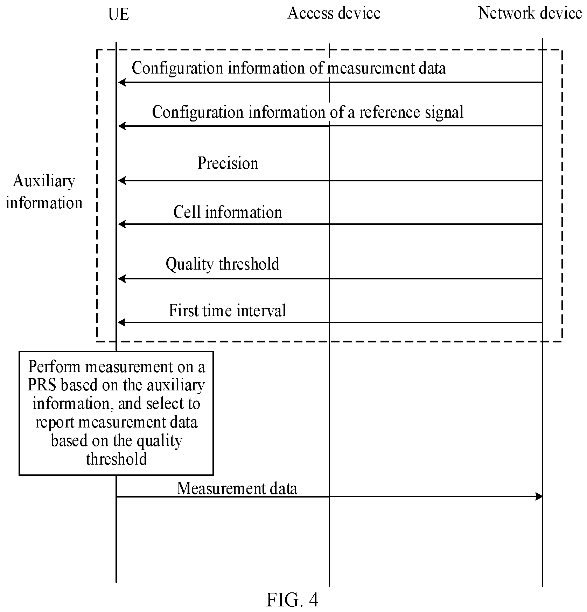

FIG. 4 is a flowchart of implementation of Embodiment 1 of the present disclosure. In this embodiment, the network device includes an LMF, and the terminal device includes a UE.

The auxiliary information may include one or more of:
(1) configuration information of the measurement data;
(2) configuration information of a reference signal;
(3) precision;
(4) cell information;
(5) a first time interval; or
(6) a quality threshold.

Here, reporting, by the terminal device, the measurement data based on the auxiliary information includes: determining, by the terminal device, content of the measurement data based on the auxiliary information. For example, the content of the measurement data is determined based on one or more of: the configuration information of the measurement data, the configuration information of the reference signal (e.g., configuration information of a PRS), the precision, the cell information, or the quality threshold.

For example, the content of the measurement data is according to the configuration information of the measurement data. The content of the measurement data includes one or more of: the measurement type, the measurement size, the measurement path, or the measurement format. The content of the measurement data may change based on the configuration information of the measurement data in the auxiliary information, which is conducive to reducing the measurement resource overhead of the terminal device and the signaling overhead when reporting a measurement value.

As another example, the content of the measurement data is determined based on the configuration information of the measurement data and the cell information. In a case where the configuration information of the measurement data indicates a first measurement format and the cell information indicates 3 predefined TRPs, the content of the measurement data is the measurement data of the first measurement format obtained by the terminal device relative to the 3 TRPs indicated by the cell information. In actual positioning scenarios, in a case where channel conditions between the UE and certain TRPs are relatively poor, the measurement between the UE and these TRPs does not need to be collected, using the cell information to configure TRPs to be measured is conducive to reducing measurement overhead of the UE and signaling overhead when reporting a measurement value.

As still another example, the content of the measurement data is determined based on the configuration information of the measurement data and the quality threshold. The terminal will report the measurement value, only in a case where the quality threshold is met, which is conducive to reducing signaling overhead when the UE reports a measurement value.

As still another example, the content of the measurement data is determined based on the configuration information of the measurement data and the precision. The network device may configure the measurement information based on a requirement of the precision, which may reduce signaling overhead when the UE reports a measurement value.

The terminal device may report the measurement data based on the auxiliary information, and the method may further include: determining, by the terminal device, the measurement time of the measurement data based on the auxiliary information. The measurement time of the measured data may be determined based on the first time interval.

Various contents included in the auxiliary information will be introduced in detail below.
(1) The configuration information of the measurement data, which may include one or more of: measurement type information, a measurement size, measurement path information, or measurement format information.

Specifically, the measurement type may include one or more of: measurement delay (timing), phase, power, CIR, PDP, DP, RSRP, or RSRPP.

The measurement size may include one or more of: a number of time domain samples, a number of frequency domain samples, a number of spatial domain samples, or a number of code domain samples. For example, the number of time domain samples may be 256 time domain sampling points, 128 time domain sampling points, 64 time domain sampling points, 32 time domain sampling points, 16 time domain sampling points, 8 time domain sampling points, or the like. For example, the number of time domain sampling points may be 2 to the power of n, where n is a positive integer.

The measurement path may include one or more of: power of a first path, delay of a first path, carrier phase of a first path, carrier phase difference of a first path, antenna subcarrier phase difference of a first path, antenna subcarrier phase of a first path, power of multipath, delay of multipath, antenna subcarrier phase difference of multipath, or antenna subcarrier phase of multipath.

The measurement format information may include n measurement formats (n is a positive integer). The n measurement formats include one or more of the following.

Measurement types of the n measurement formats are not completely the same. For example, the measurement format information includes the first measurement format, a second measurement format, a third measurement format, and a fourth measurement format; where the measurement type of the first measurement format and the measurement type of the second measurement format are the CIR, and the measurement type of the third measurement format and the measurement type of the fourth measurement format are the PDP.

Measurement overheads of the n measurement formats are not completely the same. For example, among n measurement formats, the resource overhead of the first measurement format is greater than that of the other n-1 measurement formats.

Cell information corresponding to the n measurement formats is not completely the same. The detailed description of the cell information will be introduced below.

Measurement sizes corresponding to the n measurement formats is not completely the same.

The choice of measurement format is related to target positioning precision. For example, the higher the target positioning precision, the greater the overhead corresponding to the measurement format, or the larger the measurement size corresponding to the measurement format.

In some implementations, in the configuration information of the measurement data, only measurement format information is configured, but the other three items (any measurement type information, a measurement size, and measurement path information) are not configured. The terminal device reports measurement values that meet different positioning precisions and reports signaling overheads based on different measurement formats configured by the network device. Using measurement format information to configure measurement data may reduce the total amount of auxiliary information and save signaling overhead.

(2) The configuration information of the reference signal.

The reference signal may be a PRS, and the configuration information of the reference signal includes the configuration information of the PRS. The configuration information of the PRS may include one or more of: resource set information of the PRS, or a resource configuration of the PRS.

The reference signal may also be a synchronization signal block (SS/PBCH block, SSB), a channel state information reference signal (CSI-RS), or an SRS, or the like.

The configuration information of the reference signal may be used to indicate the terminal device to measure the related reference signal.

(3) The precision, which may be understood as the target positioning precision or the target measurement precision.

Specifically, the first precision may be the measurement precision configured by the network device for specific measurement information. For example, the measurement precision configured when the measurement information is the CIR.

The first precision may also be the target positioning precision configured by the network device. In a case where the target positioning precision is 1 meter, then the estimation error of the location of the terminal device needs to be within 1 meter.

(4) The cell information.

The cell information may include one or more of:
identification information of one or more cells, such as a cell identity (ID) and a number of cells;
identification information of one or more base stations, such as a base station ID and a number of base stations;
TRP information, such as one of more of: a number of TRPs, a TRP index, or a TRP location; or
cell list information.

Taking the TRP information as an example, there are three specific cases.

Firstly, a first case of TRP information, where the TRP information is predefined.

The terminal device receives the auxiliary information transmitted by the network device, where auxiliary information includes the TRP information, and the TRP information is used to indicate the terminal device to measure the reference signal transmitted by the TRP to obtain the measurement data.

Here, the TRP information may include TRP information associated with the terminal device. Different terminal devices may be associated with different TRP information, that is, different terminal devices measure reference signals transmitted by different TRPs.

Since the terminal device reports the measurement data to the network device, and the network device determines the location of the terminal device based on the measurement data, the terminal device does not need to know the TRP location, and the TRP information transmitted by the network device to the terminal device may not include the TRP location.

The TRP information is predefined, which may be understood as the number of TRPs being predefined.

The TRP information is predefined, which may also be understood as the number of TRPs and the index of TRPs being predefined.

For example, the number of TRPs is 3, and the indexes of TRPs are from TRPn to TRPn+3-1, where n is an integer greater than or equal to 0.

For example, the number of TRPs is 6, and the indexes of TRPs are from TRPn to TRPn+6-1, where n is an integer greater than or equal to 0.

For example, the number of TRPs is 9, and the indexes of TRPs are from TRPn to TRPn+9-1, where n is an integer greater than or equal to 0.

In some implementations, the TRP information may be associated with the configuration information of the reference signal.

The network device may transmit the auxiliary information to the terminal device by using the LTE positioning protocol (LPP), which may reuse existing protocol processes and requires less standardization work.

The network device may also transmit the auxiliary information to the terminal device via an access device (e.g., a base station). For example, the network device transmits the auxiliary information to the access device, and the access device forwards the auxiliary information to the terminal device via RRC signaling. Using the RRC signaling to transmit the auxiliary information may reduce the transmission delay of the auxiliary information.

Secondly, a second case of TRP information, where the TRP information is predefined and dynamically changes.

The terminal device receives the auxiliary information transmitted by the network device at a second time point. The content indicated by the auxiliary information received at the second time point is different from the content indicated by auxiliary information received at a first time point. For example, the auxiliary information received at the second time point is used for determining updated TRP information, and the updated TRP information is used by the terminal device to perform positioning measurement, to obtain the measurement data. It follows that the terminal device may periodically receive the auxiliary information transmitted by the network device and perform positioning measurement by using the latest received auxiliary information.

Here, the updated TRP information includes the TRP information associated with the terminal device.

The updated TRP information includes one or a combination of the following: a number of TRPs, and a TRP index.

The updated TRP information is not completely the same as the TRP information received at the first time point. That is, the updated TRP information is partially different from or completely different from the TRP information received at the first time point.

For a case where the updated TRP information is completely different from the TRP information received at the first time point. For example, the updated TRP information includes TRP indexes, which are 0, 1, and 2, while the TRP information received at the first time point includes TRP indexes, which are 6, 7, and 8.

For a case where the updated TRP information is partially different from the TRP information received at the first time point. For example, the updated TRP information includes TRP indexes, which are 0, 1, and 2, while the TRP information received at the first time point includes TRP indexes, which are 0, 1, and 4.

Thirdly, a third case of TRP information, where the TRP information is predefined within a second time interval.

In some implementations, the second time interval is determined based on UE capability information. For example, the UE capability information includes moving speed of the UE.

In some implementations, the second time interval may be determined based on a timer. Duration of the timer may be included in auxiliary information or other information.

The network device may transmit the timer to the terminal device via the auxiliary information or other information. The terminal device determines the second time interval based on the timer. For example, the start time of the timer is taken as the start time of the second time interval.

The second time interval may also be understood as a time window. The start time and length of the time window may be included in the auxiliary information or other information.

In some implementations, the second time interval may be the same value as the first time interval, so that the second time interval may reuse the first time interval. That is, the auxiliary information only includes one piece of time interval information, which represents both the first time interval and the second time interval.

In a case where the terminal device is in a moving state, the TRP information associated with the location of the terminal device at the first time point may be different from the TRP information associated with the location of the terminal device at the second time point. Therefore, in this manner, the TRP information is configured to remain unchanged within the second time interval and may be updated after exceeding the second time interval, which enables more accurate measurement of the terminal device.

(5) The first time interval.

The first time interval may include a time window in which the network devices collects data, or a measurement interval configured for the terminal device.

The terminal device may measure the reference signal within the first time interval.

In some implementations, a timestamp of the measurement data of the terminal device is within the first time interval.

Specifically, a system frame number and a slot number associated with the timestamp of the measurement data belong to the first time interval.

Through using the first time interval to limit the time window used by the network device to collect data and/or the time window used by the terminal device to measure data, it may be ensured that in a case where the network device collects measurement data from multiple terminal devices, measurement data from each terminal device is obtained by measuring within the same time period, so that measurement is performed under the same condition.

(6) The quality threshold, which may include the measurement quality threshold.

The terminal device determines whether to report the measurement data based on the measurement quality threshold. For example, in a case where the quality of the measurement data is higher than or equal to the measurement quality threshold, the terminal device reports the measurement data.

Through selecting measurement data that meets the requirement by using the quality threshold and reporting the measurement data, the resource overhead required for reporting may be reduced, and the quality of measurement data may be guaranteed, which is conducive to ensuring the accuracy of positioning.

### Embodiment 2.

In this embodiment, a neural network model is used for positioning. The neural network model is deployed on a network device and is trained by a network device in advance. The network device transmits auxiliary information to a terminal device, where the auxiliary information is used for configuring measurement data and/or a label corresponding to the measurement data reported by the terminal device.

During a training process of the neural network model, the terminal device performs positioning measurement based on the auxiliary information and transmits the measurement data to the network device; the terminal device may further transmit the label corresponding to the measurement data to the network device based on the auxiliary information. The network device trains the neural network model by using the received measurement data and the label corresponding to the measurement data. Here, the label may include a location of the terminal device. The trained neural network model may determine location information of the terminal device by using the measurement data.

After the training of the neural network model is completed, the neural network model may be deployed on the network device, and used for determining the location of the terminal device during the positioning process. Specifically, during the positioning process, the terminal device performs positioning measurement based on the auxiliary information and transmits the measurement data to the network device; the network device inputs the received measurement data into a pre-deployed neural network model, and the neural network model outputs the location of the terminal device.

Before transmitting the auxiliary information to the terminal device, the network device may receive a capability of the terminal device and determine the auxiliary information based on the capability of the terminal device. In an example, the capability of the terminal device may include a measurement type, a measurement size, measurement path information, a measurement format in the configuration information of the measurement data. In another example, the capability of the terminal device may include configurations related to a first time interval supported by the terminal device, such as a size and a period of the first time interval. Here, the configuration information of the measurement data and the first time interval belong to content of the auxiliary information.

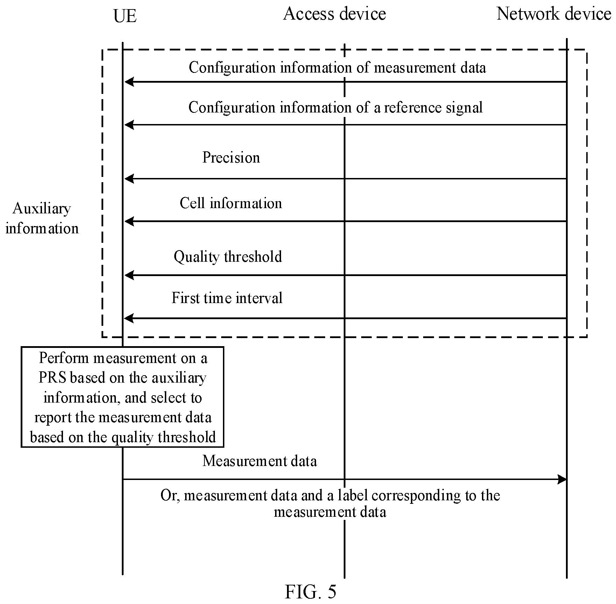

FIG. 5 is a flowchart of implementation of Embodiment 2 of the present disclosure. In this embodiment, the network device includes an LMF, and the terminal device includes a UE. The terminal device transmits measurement data to the network device, or the terminal device transmits measurement data and a label corresponding to the measurement data to the network device.

Here, the auxiliary information may include one or more of:
(1) configuration information of the measurement data;
(2) configuration information of a reference signal;
(3) precision;
(4) cell information;
(5) a first time interval; or
(6) a quality threshold.

Here, reporting, by the terminal device, the measurement data based on the auxiliary information includes: determining, by the terminal device, content of the measurement data based on the auxiliary information. For example, the content of the measurement data is determined based on one or more of: the configuration information of the measurement data, the configuration information of the reference signal (e.g., configuration information of a PRS), the precision, the cell information, or the quality threshold.

For example, the content of the measurement data is according to the configuration information of the measurement data. The content of the measurement data includes one or more of: the measurement type, the measurement size, the measurement path, or the measurement format. The content of the measurement data may change based on the configuration information of the measurement data in the auxiliary information, which is conducive to reducing the measurement resource overhead of the terminal device and the signaling overhead when reporting a measurement value.

As another example, the content of the measurement data is determined based on the configuration information of the measurement data and the cell information. In a case where the configuration information of the measurement data indicates a first measurement format and the cell information indicates 3 predefined TRPs, the content of the measurement data is the measurement data of the first measurement format obtained by the terminal device relative to the 3 TRPs indicated by the cell information. In actual positioning scenarios, in a case where channel conditions between the UE and certain TRPs are relatively poor, the measurement between the UE and these TRPs does not need to be collected, using the cell information to configure TRPs to be measured is conducive to reducing measurement overhead of the UE and signaling overhead when reporting a measurement value.

As still another example, the content of the measurement data is determined based on the configuration information of the measurement data and the quality threshold. The terminal will report the measurement value, only in a case where the quality threshold is met, which is conducive to reducing signaling overhead when the UE reports a measurement value.

As still another example, the content of the measurement data is determined based on the configuration information of the measurement data and the precision. The network device may configure the measurement information based on a requirement of the precision, which may reduce signaling overhead when the UE reports a measurement value.

The terminal device may report the measurement data based on the auxiliary information, and the method may further include: determining, by the terminal device, the measurement time of the measurement data based on the auxiliary information. The measurement time of the measured data may be determined based on the first time interval.

For the configuration information of the measurement data, the configuration information of the reference signal, and the precision included in the auxiliary information, the related introduction in Embodiment 1 may be referred to, which will not be repeated here.

The cell information in the auxiliary information may include one or more of the following:
identification information of one or more cells, such as a cell ID and a number of cells;
identification information of one or more base stations, such as base station ID and a number of base stations;
TRP information, such as one of more of: a number of TRPs, a TRP index, or a TRP location; or
cell list information.

Taking the TRP information as an example, there are three specific cases.

Firstly, a first case of TRP information, where the TRP information is predefined.

The terminal device receives the auxiliary information transmitted by the network device, where auxiliary information includes the TRP information, and the TRP information is used to indicate the terminal device to measure the reference signal transmitted by the TRP to obtain the measurement data.

Here, the TRP information may include TRP information associated with the terminal device. Different terminal devices may be associated with different TRP information, that is, different terminal devices measure reference signals transmitted by different TRPs.

Since the terminal device reports the measurement data to the network device, and the network device determines the location of the terminal device based on the measurement data, the terminal device does not need to know the TRP location, and the TRP information transmitted by the network device to the terminal device may not include the TRP location.

The TRP information is predefined, which may be understood as the number of TRPs being predefined.

The number of TRPs may be associated with the model condition of the neural network model. For example, for a first model condition, the number of TRPs is N1; for a second model condition, the number of TRPs is N2; and for a third model condition, the number of TRPs is N3. The model condition may be classified based on one or more of: model complexity, computational complexity, or target positioning precision. Tables 2A and 2B show examples of the relationship between each of the two types of model conditions and the number of TRPs.

**Table 2A**

| Model condition | The number of TRPs |
|---|---|
| Model complexity: the number of model parameters being less than 1 trillion. | N1=3 |
| Model complexity: the number of model parameters ranging from 1 trillion to 8 trillion. | N2=9 |
| Model complexity: the number of model parameters being greater than 8 trillion. | N3=18 |

**Table 2B**

| Model condition | The number of TRPs |
|---|---|
| Target positioning precision: within 5 meters | N1=3 |
| Target positioning precision: 1 to 2 meters | N2=9 |
| Target positioning precision: within 1 meter | N3=18 |

The model condition may also be determined based on the capability of the terminal device. Before receiving the auxiliary information, the terminal device may transmit the capability information of the terminal device to the network device, where the capability information includes the model condition or supported TRP information, moving speed of the UE, or the like.

The TRP information is predefined, which may also be understood as the number of TRPs and the index of TRPs being predefined.

For example, the number of TRPs is 3, and the indexes of TRPs are from TRPn to TRPn+3-1, where n is an integer greater than or equal to 0.

For example, the number of TRPs is 6, and the indexes of TRPs are from TRPn to TRPn+6-1, where n is an integer greater than or equal to 0.

For example, the number of TRPs is 9, and the indexes of TRPs are from TRPn to TRPn+9-1, where n is an integer greater than or equal to 0.

In some implementations, the TRP information may be associated with the configuration information of the reference signal.

In an example, the reference signal is an SSB.

In an example, the reference signal is a PRS.

In an example, the reference signal is a CSI-RS.

In an example, the reference signal is an SRS.

The network device may transmit the auxiliary information to the terminal device by using the LPP, which may reuse existing protocol processes and requires less standardization work.

The network device may also transmit the auxiliary information to the terminal device via an access device (e.g., a base station). For example, the network device transmits the auxiliary information to the access device, and the access device forwards the auxiliary information to the terminal device via RRC signaling. Using the RRC signaling to transmit the auxiliary information may reduce the transmission delay of the auxiliary information.

Secondly, a second case of TRP information, where the TRP information is predefined and dynamically changes.

The terminal device receives the auxiliary information transmitted by the network device at a second time point. The content indicated by the auxiliary information received at the second time point is different from the content indicated by auxiliary information received at a first time point. For example, the auxiliary information received at the second time point is used for determining updated TRP information, and the updated TRP information is used by the terminal device to perform positioning measurement, to obtain the measurement data. It follows that the terminal device may periodically receive the auxiliary information transmitted by the network device and perform positioning measurement by using the latest received auxiliary information.

Here, the updated TRP information includes the TRP information associated with the terminal device.

The updated TRP information includes one or a combination of the following: a number of TRPs, and a TRP index.

The updated TRP information is not completely the same as the TRP information received at the first time point. That is, the updated TRP information is partially different from or completely different from the TRP information received at the first time point.

For a case where the updated TRP information is completely different from the TRP information received at the first time point. For example, the updated TRP information includes TRP indexes, which are 0, 1, and 2, while the TRP information received at the first time point includes TRP indexes, which are 6, 7, and 8.

For a case where the updated TRP information is partially different from the TRP information received at the first time point. For example, the updated TRP information includes TRP indexes, which are 0, 1, and 2, while the TRP information received at the first time point includes TRP indexes, which are 0, 1, and 4.

Thirdly, a third case of TRP information, where the TRP information is predefined within a second time interval.

In some implementations, the second time interval is determined based on UE capability information. For example, the UE capability information includes moving speed of the UE.

In some implementations, the second time interval may be determined based on a timer. Duration of the timer may be included in auxiliary information or other information.

The network device may transmit the timer to the terminal device via the auxiliary information or other information. The terminal device determines the second time interval based on the timer. For example, the start time of the timer is taken as the start time of the second time interval. In a case where the neural network model used for positioning begins to update, or in a case where parameters of the neural network model used for positioning are updated, the timer restarts counting, and the second interval time is re-determined based on the restarted timer. For example, in a case where the neural network model starts updating or the parameters of the neural network model are updated, the network device retransmits the timer to the terminal device, so that the terminal device may re-determine the second time interval.

The second time interval may also be understood as a time window. The start time and length of the time window may be included in the auxiliary information or other information.

In some implementations, the second time interval may be the same value as the first time interval, so that the second time interval may reuse the first time interval. That is, the auxiliary information only includes one piece of time interval information, which represents both the first time interval and the second time interval.

Regarding the first time interval in the auxiliary information, the first time interval may include a time window in which the network devices collects data, or a measurement interval configured for the terminal device.

The terminal device may measure the reference signal within the first time interval.

In some implementations, a timestamp of the measurement data of the terminal device is within the first time interval, and a timestamp of the label corresponding to the measurement data of the terminal device is also within the first time interval.

Specifically, a reference signal resource index associated with the timestamp of the measurement data and a reference signal resource index associated with the timestamp of the label corresponding to the measurement data are same, or belong to the same reference signal resource set.

Alternatively, a cell ID associated with the timestamp of the measurement data is the same as a cell ID associated with the timestamp of the label corresponding to the measurement data.

Alternatively, a cell global ID associated with the timestamp of the measurement data is the same as a cell global ID associated with the timestamp of the label corresponding to the measurement data.

Alternatively, a system frame number and a slot number associated with the timestamp of the measurement data are the same as or belong to the first time interval as a system frame number and a slot number associated with the timestamp of the label corresponding to the measurement data.

Through using the first time interval to limit the time window used by the network device to collect data and/or the time window used by the terminal device to measure data, it may be ensured that in a case where the network device collects measurement data from multiple terminal devices, measurement data from each terminal device is obtained by measuring within the same time period, so that measurement is performed under the same condition. Furthermore, through restricting the timestamp of the measurement data and the timestamp of the label corresponding to the measurement data to be within the first time interval, it may be ensured that the measurement data and the label corresponding to the measurement data may also be associated.

For the quality threshold in the auxiliary information, the quality threshold may include one or more of: a measurement quality threshold or a label quality threshold.

The terminal device determines whether to report the measurement data and/or the label based on the measurement quality threshold and/or the label quality threshold. For example, in a case where the quality of the measurement data is higher than or equal to the measurement quality threshold, the terminal device reports the measurement data; in a case where the quality of the label is higher than or equal to the label quality threshold, the terminal device reports the label. Quality of a label being higher than or equal to a label quality threshold may be understood as an error between the label and a true value being less than or equal to the label quality threshold.

The label may be used for training the neural network model. A training set for training the neural network model includes multiple sample data. Each sample data includes measurement data obtained by the terminal device measuring the reference signal, or measurement data obtained by the terminal device measuring the reference signal and the label corresponding to the measurement data. The label may be a location of the terminal device or a positioning intermediate result. The positioning intermediate result may include TOA, LOS, and NLOS. In a case where the label is the location of the terminal device, there is a certain gap between the label and an actual location of the terminal device. The unit of quality of the label may be a distance unit, such as meter or centimeter.

Through selecting measurement data and/or label that meets the requirement by using the quality threshold and reporting the measurement data and/or label, the resource overhead required for reporting may be reduced, and the quality of the measurement data and/or label may be guaranteed, which is conducive to ensuring the accuracy of positioning.

### Embodiment 3.

In this embodiment, a neural network model is used for positioning. The neural network model is deployed on a terminal device and is trained by a network device or the terminal device in advance. The neural network model may determine a location of terminal device by using measurement data, or determine a positioning intermediate result by using the measurement data. The intermediate result may be one or more of: an RSTD measurement result, an RTD measurement result, an AOA measurement result, an AOD measurement result, RSRP, multipath measurement information, or LOS indication information.

The network device transmits auxiliary information to a terminal device, where the auxiliary information is used for configuring measurement data and/or a label corresponding to the measurement data reported by the terminal device.

During a training process of the neural network model, in a case where the training is performed by the network device, the terminal device performs positioning measurement based on the auxiliary information and transmits the measurement data to the network device; the terminal device may further transmit the label corresponding to the measurement data to the network device based on the auxiliary information. The network device trains the neural network model by using the received measurement data and the label corresponding to the measurement data, and then the network device transmits the trained neural network model to the terminal device, where the neural network model is deployed by the terminal device. Here, the label may include the location of the terminal device or the positioning intermediate result. The trained neural network model may determine the location of the terminal device or the positioning intermediate result by using the measurement data.

During a training process of the neural network model, in a case where the training is performed by the terminal device, the terminal device performs positioning measurement based on the auxiliary information. The terminal device trains the neural network model by using the measurement data and the label corresponding to the measurement data, and then the terminal device deploys the trained neural network model locally. Here, the label may include the location of the terminal device or the positioning intermediate result. The trained neural network model may determine the location of the terminal device or the positioning intermediate result by using the measurement data.

After the training of the neural network model is completed, the neural network model may be deployed on the terminal device, and used for determining the location of the terminal device or positioning intermediate result during the positioning process. Specifically, during the positioning process, the terminal device performs positioning measurement according to the auxiliary information and inputs the measurement data into a pre-deployed neural network model, and the neural network model outputs the location of the terminal device or the positioning intermediate result. In a case where the neural network model determines the positioning intermediate result, the terminal device may transmit the positioning intermediate result to the network device, and the network device may determine the location of the terminal device by using the positioning intermediate result.

Before transmitting the auxiliary information to the terminal device, the network device may receive a capability of the terminal device and determine the auxiliary information based on the capability of the terminal device. In an example, the capability of the terminal device may include a measurement type, a measurement size, measurement path information, a measurement format in the configuration information of the measurement data. In another example, the capability of the terminal device may include configurations related to a first time interval supported by the terminal device, such as a size and a period of the first time interval. Here, the configuration information of the measurement data and the first time interval belong to content of the auxiliary information.

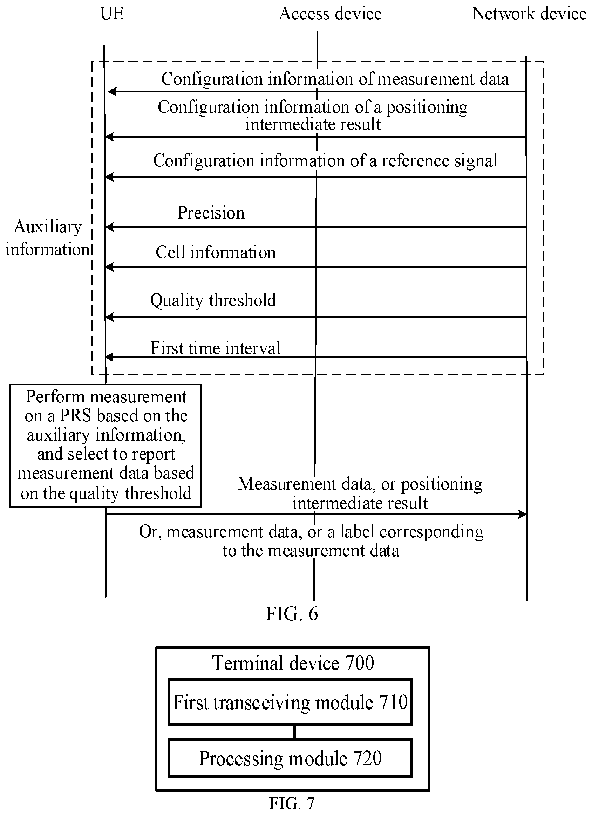

FIG. 6 is a flowchart of implementation of Embodiment 3 of the present disclosure. In this embodiment, the network device includes an LMF, and the terminal device includes a UE.

In a case where the network device trains a neural network model, during the model training process, the terminal device transmits measurement data to the network device, or the terminal device transmits the measurement data and a label corresponding to the measurement data to the network device; the label may include a location of the terminal device or a positioning intermediate result. During the positioning process, the terminal device may transmit the positioning intermediate result to the network device.

In a case where the terminal device trains the neural network model, the terminal device does not transmit data to the network device during the model training process. During the positioning process, the terminal device may transmit the positioning intermediate result to the network device.

The auxiliary information may include one or more of:
(1) configuration information of the measurement data;
(2) configuration information of the positioning locating intermediate;
(3) configuration information of a reference signal;
(4) precision;
(5) cell information;
(6) a first time interval; or
(7) a quality threshold.

Here, the configuration information of the positioning intermediate result may be used for configuring the positioning intermediate result transmitted by the terminal device to the network device. For other contents included in the auxiliary information, the related content in the above Embodiment 1 and Embodiment 2 may be referred to, which will not be repeated here.

FIG. 7 is a schematic block diagram of a terminal device 700 according to an embodiment of the present disclosure. The terminal device 700 may include:
a first transceiving module 710, configured to receive auxiliary information transmitted by a network device; and; and
a processing module 720, configured to perform measurement based on the auxiliary information, to obtain measurement data.

In some implementations, the first transceiving module 710 is further configured to transmit one or more of the following to the network device based on the auxiliary information:
the measurement data;
a positioning intermediate result determined by using the measurement data; or
a label corresponding to the measurement data.

In some implementations, the label corresponding to the measurement data include one or more of: a location of the terminal device, TOA, line of sight, or non-line of sight.

In some implementations, the auxiliary information includes one or more of:
configuration information of the measurement data;
configuration information of the positioning intermediate result;
configuration information of a reference signal;
precision;
cell information;
a first time interval; or
a quality threshold.

In some implementations, the configuration information of the measurement data includes one or more of: measurement type information, a measurement size, measurement path information, or measurement format information.

In some implementations, the measurement type information includes one or more of: measurement delay, phase, power, CIR, PDP, DP, RSRP, or RSRPP.

In some implementations, the measurement size includes one or more of: a number of time domain samples, a number of frequency domain samples, a number of spatial domain samples, or a number of code domain samples.

In some implementations, the measurement path information includes one or more of: power of a first path, delay of a first path, carrier phase of a first path, carrier phase difference of a first path, antenna subcarrier phase difference of a first path, antenna subcarrier phase of a first path, power of multipath, delay of multipath, carrier phase of multipath, carrier phase difference of multipath, antenna subcarrier phase difference of multipath, or antenna subcarrier phase of multipath.

In some implementations, the measurement format information includes one or more measurement formats, and one or more of the following corresponding to different measurement formats are different: a measurement type, measurement overhead, cell information, a measurement size, or precision.

In some implementations, the processing module 720 is configured to:
perform measurement based on one or more of: the configuration information of the measurement data, the cell information, the quality threshold, or the precision; and/or
determine measurement data to be transmitted by using one or more of: the configuration information of the measurement data or the quality threshold.

In some implementations, the configuration information of the positioning intermediate result includes intermediate result type information; and
the intermediate result type information includes one or more of: a RSTD measurement result, a RTD measurement result, an AOA measurement result, an AOD measurement result, RSRP, multipath measurement information, LOS indication information, NLOS indication information, or a TOA measurement result.

In some implementations, the configuration information of the reference signal includes configuration information of a PRS.

In some implementations, the precision includes one or more of: target positioning precision or target measurement precision.

In some implementations, the precision includes one or more target measurement precisions configured for specific measurement data.

In some implementations, the cell information includes one or more of:
identification information of one or more cells;
identification information of one or more access devices;
transmission reception point (TRP) information; or
cell list information.

In some implementations, the TRP information includes one or more of: a number of TRPs, a TRP index, or a TRP location.

In some implementations, the processing module 720 is configured to perform measurement by using the TRP information.

In some implementations, the number of TRPs and/or the TRP index are determined based on one or more of: target positioning precision or a model condition of a neural network model; and
the neural network model is used for performing positioning by using the measurement data, or determining the positioning intermediate result by using the measurement data.

In some implementations, the model condition is classified according to one or more of: model complexity or computational complexity.

In some implementations, the number of TRPs and/or the TRP index are determined based on one or more of: a capability of the terminal device or a model condition of a neural network model; and
the neural network model is used for performing positioning by using the measurement data, or determining the positioning intermediate result by using the measurement data.

In some implementations, the capability of the terminal device includes one or more of: TRP information supported by the terminal device or moving speed of the terminal device.

In some implementations, the TRP information may be associated with the configuration information of the reference signal.

In some implementations, the first time interval includes a time window in which the network device collects the measurement data and/or a time window in which the terminal device measures the measurement data.

In some implementations, the processing module 720 is configured to perform measurement on the reference signal within the first time interval.

In some implementations, the processing module 720 is configured to:
a timestamp of the measurement data of the terminal device being within the first time interval, and a timestamp of the label corresponding to the measurement data being within the first time interval.

In some implementations, the quality threshold includes one or more of: a measurement quality threshold or a label quality threshold.

In some implementations, the first transceiving module 710 is configured to: in a case where quality of the measurement data is higher than or equal to the measurement quality threshold, transmit the measurement data.

In some implementations, the first transceiving module 710 is configured to: in a case where quality of the label corresponding to the measurement data is higher than or equal to the label quality threshold, transmit the label corresponding to the measurement data.

In some implementations, the first transceiving module 710 is configured to:
receive the auxiliary information periodically transmitted by the network device; or
receive the auxiliary information that is transmitted by the network device in a case where a triggering condition is met.

In some implementations, the processing module 720 is configured to perform measurement based on the auxiliary information within a second time interval.

In some implementations, the first transceiving module 710 is further configured to:
receive the second time interval from the network device; and/or
receive a timer from the network device; and determine the second time interval based on the timer.

In some implementations, the auxiliary information further includes the second time interval and/or the timer.

In some implementations, a value of the second time interval is the same as a value of the first time interval.

In some implementations, the first transceiving module 710 is further configured to receive a neural network model; where the neural network model is obtained through training using the measurement data.

In some implementations, the first transceiving module 710 is further configured to:
transmit a capability of the terminal device to the network device; where the capability of the terminal device is used for determining the auxiliary information.

In some implementations, the capability of the terminal device includes one or more of: a measurement type supported by the terminal device, a measurement size supported by the terminal device, a number of measurement paths supported by the terminal device, a measurement format supported by the terminal device, or a value of a first time interval supported by the terminal device.

In some implementations, the network device includes an LMF or an access device.

The terminal device 700 in the embodiments of the present disclosure may implement the corresponding functions of the terminal device in the above method embodiments. The processes, functions, implementation methods, and beneficial effects of various modules (sub-modules, units, components, or the like) in the terminal device 700 may be found in the corresponding descriptions in the above method embodiments, which will not be repeated here. It should be noted that the functions described in the various modules (sub-modules, units, or components, or the like) of the terminal device 700 in the embodiments of the present disclosure may be implemented by different modules (sub-modules, units, or components, or the like) or by the same module (sub-module, unit, or component, or the like).

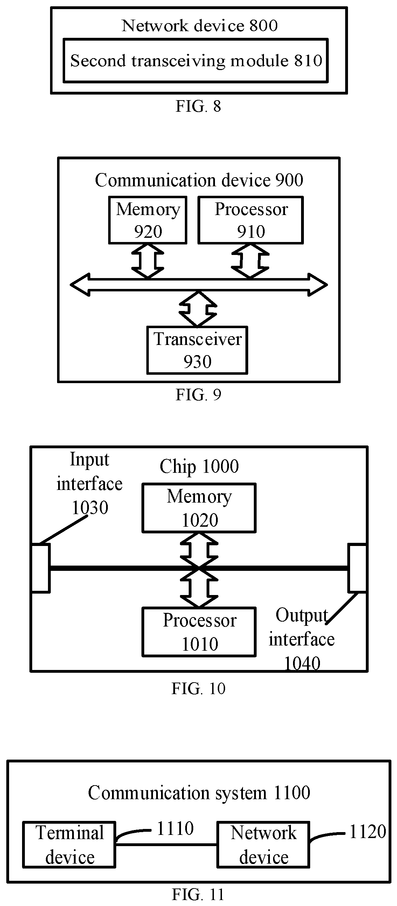

FIG. 8 is a schematic block diagram of a network device 800 according to an embodiment of the present disclosure. The network device 800 may include:
a second transceiving module 810, configured to transmit auxiliary information to a terminal device; where the auxiliary information is used to indicate the terminal device to perform measurement, to obtain measurement data.

In some embodiments, the second transceiving module 810 is further configured to receive one or more of the following from the terminal device:
the measurement data;
a positioning intermediate result determined by using the measurement data; or
a label corresponding to the measurement data.

In some implementations, the label corresponding to the measurement data includes one or more of: a location of the terminal device, TOA, LOS, or NLOS.

In some implementations, the auxiliary information includes one or more of:
configuration information of the measurement data;
configuration information of the positioning intermediate result;
configuration information of a reference signal;
precision;
cell information;
a first time interval; or
a quality threshold.

In some implementations, the configuration information of the measurement data includes one or more of: measurement type information, a measurement size, measurement path information, or measurement format information.

In some implementations, the measurement type information includes one or more of: measurement delay, phase, power, CIR, PDP, DP, RSRP, or rate RSRPP.

In some implementations, the measurement size includes one or more of: a number of time domain samples, a number of frequency domain samples, a number of spatial domain samples, or a number of code domain samples.

In some implementations, the measurement path information includes one or more of: power of a first path, delay of a first path, carrier phase of a first path, carrier phase difference of a first path, antenna subcarrier phase difference of a first path, antenna subcarrier phase of a first path, power of multipath, delay of multipath, carrier phase of multipath, carrier phase difference of multipath, antenna subcarrier phase difference of multipath, or antenna subcarrier phase of multipath.

In some implementations, the measurement format information includes one or more measurement formats, and one or more of the following corresponding to different measurement formats are different: a measurement type, measurement overhead, cell information, a measurement size, or precision.

In some implementations, the configuration information of the positioning intermediate result includes intermediate result type information; and
the intermediate result type information includes one or more of: an RSTD measurement result, a round trip time delay measurement result, an AOA measurement result, an AOD measurement result, RSRP, multipath measurement information, LOS indication information, LOS indication information, or a TOA measurement result.

In some implementations, the configuration information of reference signal includes configuration information of a PRS.

In some implementations, the precision includes one or more of: target positioning precision or target measurement precision.

In some implementations, the precision includes one or more target measurement precisions configured for specific measurement data.

In some implementations, the cell information includes one or more of:
identification information of one or more cells;
identification information of one or more access devices;
TRP information; or
cell list information.

In some implementations, TRP information includes one or more of: a number of TRPs, a TRP index or a TRP location.

In some implementations, the number of TRPs and/or the TRP index are determined based on one or more of: target positioning precision or a model condition of a neural network model; and
the neural network model is used for performing positioning by using the measurement data, or determining the positioning intermediate result by using the measurement data.

In some implementations, the model condition is classified according to one or more of: model complexity or computational complexity.

In some implementations, the number of TRPs and/or the TRP index are determined based on one or more of: a capability of the terminal device or a model condition of a neural network model; and
the neural network model is used for performing positioning by using the measurement data, or determining the positioning intermediate result by using the measurement data.

In some implementations, the capability of the terminal device includes one or more of: TRP information supported by the terminal device or moving speed of the terminal device.

In some implementations, the TRP information is carried in the configuration information of the reference signal.

In some implementations, the first time interval includes a time window in which the network device collects the measurement data and/or a time window in which the terminal device measures the measurement data.

In some implementations, the quality threshold includes one or more of: a measurement quality threshold or a label quality threshold.

In some implementations, the second transceiving module 810 is configured to:
transmit the auxiliary information to the terminal device periodically; or
transmit the auxiliary information to the terminal device in a case where a triggering condition is met.

In some embodiments, the second transceiving module 810 is further configured to transmit a second time interval and/or a timer to the terminal device, which is used to indicate the terminal device to perform measurement within the second time interval.

In some implementations, the auxiliary information further includes the second time interval and/or the timer.

In some implementations, a value of the second time interval is the same as a value of the first time interval.

In some implementations, the second transceiving module 810 is further configured to transmit a neural network model to the terminal device; where the neural network model is obtained through training using the measurement data.

In some implementations, the second transceiving module 810 is further configured to receive a capability of the terminal device from the terminal device; where the capability of the terminal device is used for determining the auxiliary information.

In some implementations, the capability of the terminal device includes one or more of: a measurement type supported by the terminal device, a measurement size supported by the terminal device, a number of measurement paths supported by the terminal device, a measurement format supported by the terminal device, or a value of a first time interval supported by the terminal device.

In some implementations, the network device includes an LMF or an access device.

The network device 800 in the embodiments of the present disclosure may implement the corresponding functions of the network device in the above method embodiments. The processes, functions, implementation methods, and beneficial effects of various modules (sub-modules, units, components, or the like) in the network device 800 may be found in the corresponding descriptions in the above method embodiments, which will not be repeated here. It should be noted that the functions described in the various modules (sub-modules, units, components, or the like) of the network device 500 in the embodiments of the present disclosure may be implemented by different modules (sub-modules, units, components, or the like) or by the same module (sub-module, unit, component, or the like).

FIG. 9 is a schematic structural diagram of a communication device 900 according to the embodiments of the present disclosure. The communication device 900 includes a processor 910. The processor 910 may call a computer program from the memory and run the computer program, to enable the communication device 900 to implement the methods in the embodiments of the present disclosure.

In an implementation, the communication device 900 may further include a memory 920. The processor 910 may call a computer program from the memory 920 and run the computer program, to enable the communication device 900 to implement the methods in the embodiments of the present application.

Here, the memory 920 may be a separate device independent of the processor 910, or may be integrated into the processor 910.

In an implementation, the communication device 900 may further include a transceiver 930. The processor 910 may control the transceiver 930 to communicate with other devices, and specifically, may transmit information or data to other devices, or receive information or data transmitted by other devices.

Here, the transceiver 930 may include a transmitter and a receiver. The transceiver 930 may further include antenna(s), and the number of antennas may be one or more.

In an implementation, the communication device 900 may be a network device in the embodiments of the present disclosure, and the communication device 900 may implement the corresponding processes implemented by the terminal device in the various methods of the embodiments of the present disclosure, which will not be repeated here for the sake of brevity. The terminal device includes a memory, a processor, and a transceiver. The memory may store a program executed by the terminal device; the processor executes the program, specifically, the processor may execute the actions performed by the processing module 720; the transceiver is controlled by the processor and executes the actions performed by the first transceiving module 710.

In an implementation, the communication device 900 may be the network device in the embodiments of the present disclosure, and the communication device 900 may implement the corresponding processes implemented by the network device in the various methods of the embodiments of the present disclosure, which will not be repeated here for the sake of brevity. The network device includes a memory, a processor, and a transceiver. Here, the memory may store a program executed by the network device; the processor executes the program; the transceiver is controlled by the processor and performs the actions performed by the second transceiving module 810.

FIG. 10 is a schematic structural diagram of a chip 1000 according to the embodiments of the present disclosure. The chip 1000 includes a processor 1010. The processor 1010 may call a computer program from memory and run the computer program, to implement the methods in the embodiments of the present disclosure.

In an implementation, the chip 1000 may further include a memory 1020. The processor 1010 may call a computer program from the memory 1020 and run the computer program, to implement the methods performed by the terminal device or the network device in the embodiments of the present disclosure.

Here, the memory 1020 may be a separate device independent of the processor 1010, or may be integrated into the processor 1010.

In an implementation, the chip 1000 may further include an input interface 1030. The processor 1010 may control the input interface 1030 to communicate with other devices or chips, and specifically, may obtain information or data transmitted by other devices or chips.

In an implementation, the chip 1000 may further include an output interface 1040. The processor 1010 may control the output interface 1040 to communicate with other devices or chips, and specifically, may output information or data to other devices or chips.

In an implementation, the chip may be applied to the network device in the embodiments of the present disclosure, and the chip may implement the corresponding processes implemented by the network device in the various methods of the embodiments of the present disclosure, which will not be repeated here for the sake of brevity.

In an implementation, the chip may be applied to the terminal device in the embodiments of the present disclosure, and the chip may implement the corresponding processes implemented by the terminal device in the various methods of the embodiments of the present disclosure, which will not be repeated here for the sake of brevity.

The chips applied to network device and the terminal device may be the same chip or different chips.

It should be understood that the chip mentioned in the embodiments of the present disclosure may also be called a system-level chip, a system chip, a chip system, a system-on-chip chip, or the like.

The processor mentioned above may be a general purpose processor, a digital signal processor (DSP), a field programmable gate array (FPGA), an application specific integrated circuit (ASIC) or other programmable logic devices, a transistor logic device, or a discrete hardware component. The general purpose processor mentioned above may be a microprocessor, or any conventional processor.

The above mentioned memory may be a volatile (transitory) memory or a non-volatile (non-transitory) memory, or may include both volatile and non-volatile memories. The non-volatile memory may be a read-only memory (ROM), a programmable ROM (PROM), an erasable PROM (EPROM), an electrically EPROM (EEPROM), or a flash memory. The volatile memory may be a random access memory (RAM).

It should be understood that the above memory is exemplary but not limited illustration. For example, the memory in the embodiments of the present disclosure may be a static RAM (SRAM), a dynamic RAM (DRAM), a synchronous DRAM (SDRAM)), a double data rate SDRAM (DDR SDRAM), an enhanced SDRAM (ESDRAM), a synchronous link DRAM (SLDRAM), or a direct rambus RAM (DR RAM). That is, the memory in the embodiments of the present disclosure is intended to include, but is not limited to, these and any other suitable types of memories.

FIG. 11 is a schematic block diagram of a communication system 1100 according to the embodiments of the present application. The communication system 1100 includes a terminal device 1110 and a network device **11**2**0**.

The terminal device 1110 is configured to receive auxiliary information transmitted by the network device; and perform positioning measurement based on the auxiliary information to obtain measurement data;

The network device 1120 is configured to transmit auxiliary information to the terminal device; where the auxiliary information is used to indicate the terminal device to perform measurement, to obtain measurement data.

Here, the terminal device 1110 may be configured to implement the corresponding functions implemented by the terminal device in the above methods, and the network device 1120 may be configured to implement the corresponding functions implemented by the network device in the above method, which will not be repeated here for the sake of brevity.

The above embodiments, in whole or in part, may be implemented by software, hardware, firmware, or any combination thereof. When implemented by using software, the above embodiments, in whole or in part, may be implemented in the form of a computer program product. The computer program product includes one or more computer instructions. When the computer program instructions are loaded and performed on a computer, procedures or functions according to the embodiments of the present disclosure are generated in whole or in part. The computer may be a general purpose computer, a special purpose computer, a computer network, or other programmable apparatus. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center in a wired (e.g., coaxial cable, optical fiber, or digital subscriber line (DSL)) or wireless (e.g., infrared, radio, microwave, or the like) manner. The computer-readable storage medium may be any available medium that may be accessed by a computer, or a data storage device such as a server or a data center that includes one or more available media integrated therein. The available medium may be a magnetic medium (e.g., a floppy disk, a hard disk, or a magnetic tape), an optical medium (e.g., a digital video disk (DVD)), a semiconductor medium (e.g., a solid state disk (SSD)), or the like.

It should be understood that in the various embodiments of the present disclosure, the magnitude of the sequence numbers of the aforementioned processes does not mean the order of execution. The order of execution of the aforementioned various processes should be determined by their functions and internal logics, and shall not constitute any limitation on the implementation process of the embodiments of the present disclosure.

Those skilled in the art may clearly understand that for the convenience and brevity of the description, the specific operating processes of the system, apparatus/device and unit described above may refer to the corresponding processes in the aforementioned method embodiments, which will not be repeated here.

The foregoing descriptions are merely specific implementations of the present disclosure, but the protection scope of the present disclosure is not limited thereto. Any skilled person in the art could readily conceive of changes or replacements within the technical scope disclosed in the present disclosure, which shall be all included within the protection scope of the present disclosure. Therefore, the protection scope of the present disclosure shall be subject to the protection scope of the claims.

## Claims

1. A measurement configuration method, comprising:
receiving, by a terminal device, auxiliary information transmitted by a network device; and
performing, by the terminal device, measurement based on the auxiliary information, to obtain measurement data.

2. The method according to claim 1, further comprising:
transmitting, by the terminal device, one or more of the following to the network device based on the auxiliary information:
the measurement data;
a positioning intermediate result determined by using the measurement data; or
a label corresponding to the measurement data.

3. The method according to claim 2, wherein the label corresponding to the measurement data comprises one or more of: a location of the terminal device, time of arrival (TOA), line of sight (LOS), or non-line of sight (NLOS).

4. The method according to claim 2 or 3, wherein the auxiliary information comprises one or more of:
configuration information of the measurement data;
configuration information of the positioning intermediate result;
configuration information of a reference signal;
precision;
cell information;
a first time interval; or
a quality threshold.

5. The method according to claim 4, wherein the configuration information of the measurement data comprises one or more of: measurement type information, a measurement size, measurement path information, or measurement format information.

6. The method according to claim 5, wherein the measurement type information comprises one or more of: measurement delay, phase, power, channel impulse response (CIR), power delay profile (PDP), delay profile (DP), reference signal received power (RSRP), or reference signal received path power (RSRPP).

7. The method according to claim 5, wherein the measurement size comprises one or more of: a number of time domain samples, a number of frequency domain samples, a number of spatial domain samples, or a number of code domain samples.

8. The method according to claim 5, wherein the measurement path information comprises one or more of: power of a first path, delay of a first path, carrier phase of a first path, carrier phase difference of a first path, antenna subcarrier phase difference of a first path, antenna subcarrier phase of a first path, power of multipath, delay of multipath, carrier phase of multipath, carrier phase difference of multipath, antenna subcarrier phase difference of multipath, or antenna subcarrier phase of multipath.

9. The method according to claim 5, wherein the measurement format information comprises one or more measurement formats, and one or more of the following corresponding to different measurement formats are different: a measurement type, measurement overhead, cell information, a measurement size, or precision.

10. The method according to any one of claims 4 to 9, wherein performing, by the terminal device, measurement based on the auxiliary information comprises:
performing, by the terminal device, measurement based on one or more of: the configuration information of the measurement data, the cell information, the quality threshold, or the precision; and/or
determining, by the terminal device, measurement data to be transmitted by using one or more of: the configuration information of the measurement data or the quality threshold.

11. The method according to claim 4, wherein the configuration information of the positioning intermediate result comprises intermediate result type information; and
the intermediate result type information comprises one or more of: a reference signal time difference (RSTD) measurement result, a round trip delay (RTD) measurement result, an angle of arrival (AOA) measurement result, an angle of departure (AOD) measurement result, reference signal received power (RSRP), multipath measurement information, line of sight (LOS) indication information, non-line of sight (NLOS) indication information, or a time of arrival (TOA) measurement result.

12. The method according to claim 4, wherein the configuration information of the reference signal comprises configuration information of a positioning reference signal (PRS).

13. The method according to claim 4, wherein the precision comprises one or more of: target positioning precision or target measurement precision.

14. The method according to claim 13, wherein the precision comprises one or more target measurement precisions configured for specific measurement data.

15. The method according to claim 4, wherein the cell information comprises one or more of:
identification information of one or more cells;
identification information of one or more access devices;
transmission reception point (TRP) information; or
cell list information.

16. The method according to claim 15, wherein the TRP information comprises one or more of: a number of TRPs, a TRP index, or a TRP location.

17. The method according to claim 15 or 16, wherein performing, by the terminal device, measurement based on the auxiliary information comprises:
performing, by the terminal device, measurement by using the TRP information.

18. The method according to claim 16, wherein the number of TRPs and/or the TRP index are determined based on one or more of: target positioning precision or a model condition of a neural network model; and
the neural network model is used for performing positioning by using the measurement data, or determining the positioning intermediate result by using the measurement data.

19. The method according to claim 18, wherein the model condition is classified according to one or more of: model complexity or computational complexity.

20. The method according to claim 16, wherein the number of TRPs and/or the TRP index are determined based on one or more of: a capability of the terminal device or a model condition of a neural network model; and
the neural network model is used for performing positioning by using the measurement data, or determining the positioning intermediate result by using the measurement data.

21. The method according to claim 20, wherein the capability of the terminal device comprises one or more of: TRP information supported by the terminal device or moving speed of the terminal device.

22. The method according to any one of claims 15 to 21, wherein the TRP information is carried in the configuration information of the reference signal.

23. The method according to any one of claims 4 to 22, wherein the first time interval comprises a time window in which the network device collects the measurement data and/or a time window in which the terminal device measures the measurement data.

24. The method according to claim 23, wherein performing, by the terminal device, measurement based on the auxiliary information comprises:
performing, by the terminal device, measurement on the reference signal within the first time interval.

25. The method according to claim 24, wherein performing, by the terminal device, measurement on the reference signal within the first time interval comprises:
a timestamp of the measurement data of the terminal device being within the first time interval, and a timestamp of the label corresponding to the measurement data being within the first time interval.

26. The method according to any one of claims 4 to 24, wherein the quality threshold comprises one or more of: a measurement quality threshold or a label quality threshold.

27. The method according to claim 26, wherein transmitting, by the terminal device, the measurement data to the network device comprises:
in a case where quality of the measurement data is higher than or equal to the measurement quality threshold, transmitting, by the terminal device, the measurement data.

28. The method according to claim 26, wherein transmitting, by the terminal device, the label corresponding to the measurement data to the network device comprises:
in a case where quality of the label corresponding to the measurement data is higher than or equal to the label quality threshold, transmitting, by the terminal device, the label corresponding to the measurement data.

29. The method according to any one of claims 1 to 28, wherein receiving, by the terminal device, the auxiliary information transmitted by the network device comprises:
receiving, by the terminal device, the auxiliary information periodically transmitted by the network device; or
receiving, by the terminal device, the auxiliary information that is transmitted by the network device in a case where a triggering condition is met.

30. The method according to any one of claims 4 to 9, wherein performing, by the terminal device, measurement based on the auxiliary information comprises:
performing, by the terminal device, measurement based on the auxiliary information within a second time interval.

31. The method according to claim 30, further comprising:
receiving, by the terminal device, the second time interval from the network device; and/or
receiving, by the terminal device, a timer from the network device; and determining, by the terminal device, the second time interval based on the timer.

32. The method according to claim 31, wherein the auxiliary information further comprises the second time interval and/or the timer.

33. The method according to any one of claims 30 to 32, wherein a value of the second time interval is the same as a value of the first time interval.

34. The method according to any one of claims 1 to 33, further comprising:
receiving, by the terminal device, a neural network model; wherein the neural network model is obtained through training using the measurement data.

35. The method according to any one of claims 1 to 33, wherein before the terminal device receives the auxiliary information transmitted by the network device, the method further comprises:
transmitting, by the terminal device, a capability of the terminal device to the network device; wherein the capability of the terminal device is used for determining the auxiliary information.

36. The method according to claim 35, wherein the capability of the terminal device comprises one or more of: a measurement type supported by the terminal device, a measurement size supported by the terminal device, a number of measurement paths supported by the terminal device, a measurement format supported by the terminal device, or a value of a first time interval supported by the terminal device.

37. The method according to any one of claims 1 to 36, wherein the network device comprises a location management function (LMF) or an access device.

38. A measurement configuration method, comprising:
transmitting, by a network device, auxiliary information to a terminal device; wherein the auxiliary information is used to indicate the terminal device to perform measurement, to obtain measurement data.

39. The method according to claim 38, further comprising:
receiving, by the network device, one or more of the following from the terminal device:
the measurement data;
a positioning intermediate result determined by using the measurement data; or
a label corresponding to the measurement data.

40. The method according to claim 39, wherein the label corresponding to the measurement data comprises one or more of: a location of the terminal device, time of arrival (TOA), line of sight (LOS), or non-line of sight (NLOS).

41. The method according to claim 39 or 40, wherein the auxiliary information comprises one or more of:
configuration information of the measurement data;
configuration information of the positioning intermediate result;
configuration information of a reference signal;
precision;
cell information;
a first time interval; or
a quality threshold.

42. The method according to claim 41, wherein the configuration information of the measurement data comprises one or more of: measurement type information, a measurement size, measurement path information, or measurement format information.

43. The method according to claim 42, wherein the measurement type information comprises one or more of: measurement delay, phase, power, channel impulse response (CIR), power delay profile (PDP), delay profile (DP), reference signal received power (RSRP), or reference signal received path power (RSRPP).

44. The method according to claim 42, wherein the measurement size comprises one or more of: a number of time domain samples, a number of frequency domain samples, a number of spatial domain samples, or a number of code domain samples.

45. The method according to claim 42, wherein the measurement path information comprises one or more of: power of a first path, delay of a first path, carrier phase of a first path, carrier phase difference of a first path, antenna subcarrier phase difference of a first path, antenna subcarrier phase of a first path, power of multipath, delay of multipath, carrier phase of multipath, carrier phase difference of multipath, antenna subcarrier phase difference of multipath, or antenna subcarrier phase of multipath.

46. The method according to claim 42, wherein the measurement format information comprises one or more measurement formats, and one or more of the following corresponding to different measurement formats are different: a measurement type, measurement overhead, cell information, a measurement size, or precision.

47. The method according to claim 41, wherein the configuration information of the positioning intermediate result comprises intermediate result type information; and
the intermediate result type information comprises one or more of: a reference signal time difference (RSTD) measurement result, a round trip delay (RTD) measurement result, an angle of arrival (AOA) measurement result, an angle of departure (AOD) measurement result, reference signal received power (RSRP), multipath measurement information, line of sight (LOS) indication information, non-line of sight (NLOS) indication information, or a time of arrival (TOA) measurement result.

48. The method according to claim 41, wherein the configuration information of the reference signal comprises configuration information of a positioning reference signal (PRS).

49. The method according to claim 41, wherein the precision comprises one or more of: target positioning precision or target measurement precision.

50. The method according to claim 49, wherein the precision comprises one or more target measurement precisions configured for specific measurement data.

51. The method according to claim 41, wherein the cell information comprises one or more of:
identification information of one or more cells;
identification information of one or more access devices;
transmission reception point (TRP) information;
or cell list information.

52. The method according to claim 51, wherein the TRP information comprises one or more of: a number of TRPs, a TRP index or a TRP location.

53. The method according to claim 52, wherein the number of TRPs and/or the TRP index are determined based on one or more of: target positioning precision or a model condition of a neural network model; and
the neural network model is used for performing positioning by using the measurement data, or determining the positioning intermediate result by using the measurement data.

54. The method according to claim 53, wherein the model condition is classified according to one or more of: model complexity or computational complexity.

55. The method according to claim 54, wherein the number of TRPs and/or the TRP index are determined based on one or more of: a capability of the terminal device or the model condition of a neural network model; and
the neural network model is used for performing positioning by using the measurement data, or determining the positioning intermediate result by using the measurement data.

56. The method according to claim 55, wherein the capability of the terminal device comprises one or more of: TRP information supported by the terminal device or moving speed of the terminal device.

57. The method according to any one of claims 52 to 56, wherein the TRP information is carried in the configuration information of the reference signal.

58. The method according to any one of claims 41 to 57, wherein the first time interval comprises a time window in which the network device collects the measurement data and/or a time window in which the terminal device measures the measurement data.

59. The method according to any one of claims 41 to 58, wherein the quality threshold comprises one or more of: a measurement quality threshold or a label quality threshold.

60. The method according to any one of claims 38 to 59, wherein transmitting, by the network device, the auxiliary information to the terminal device comprises:
transmitting, by the network device, the auxiliary information to the terminal device periodically; or
transmitting, by the network device, the auxiliary information to the terminal device in a case where a triggering condition is met.

61. The method according to any one of claims 41 to 59, further comprising:
transmitting, by the network device, a second time interval and/or a timer to the terminal device, which is used to indicate the terminal device to perform measurement within the second time interval.

62. The method according to claim 61, wherein the auxiliary information further comprises the second time interval and/or the timer.

63. The method according to claim 62, wherein a value of the second time interval is the same as a value of the first time interval.

64. The method according to any one of claims 38 to 63, further comprising:
transmitting, by the network device, a neural network model to the terminal device; wherein the neural network model is obtained through training using the measurement data.

65. The method according to any one of claims 38 to 64, wherein before the network device transmits the auxiliary information to the terminal device, the method further comprises:
receiving, by the network device, a capability of the terminal device from the terminal device; wherein the capability of the terminal device is used for determining the auxiliary information.

66. The method according to claim 65, wherein the capability of the terminal device comprises one or more of: a measurement type supported by the terminal device, a measurement size supported by the terminal device, a number of measurement paths supported by the terminal device, a measurement format supported by the terminal device, or a value of a first time interval supported by the terminal device.

67. The method according to any one of claims 38 to 66, wherein the network device comprises a location management function (LMF) or an access device.

68. A terminal device, comprising:
a first transceiving module, configured to receive auxiliary information transmitted by a network device; and
a processing module, configured to perform measurement based on the auxiliary information, to obtain measurement data.

69. A network device, comprising:
a second transceiving module, configured to transmit auxiliary information to a terminal device; wherein the auxiliary information is used to indicate the terminal device to perform measurement, to obtain measurement data.

70. A terminal device, comprising: a processor and a memory, wherein the memory is configured to store a computer program, the processor is configured to call the computer program stored in the memory and run the computer program, to enable the terminal device to perform the method as described in any one of claims 1 to 37.

71. A network device comprising: a processor and a memory, wherein the memory is configured to store a computer program, the processor is configured to call the computer program stored in the memory and run the computer program, to enable the network device to perform the method as described in any one of claims 38 to 67.

72. A chip comprising: a processor, wherein the processor is configured to call a computer program from a memory and run the computer program, to enable a device equipped with the chip to perform the method as described in any one of claims 1 to 67.

73. A computer-readable storage medium, configured to store a computer program, wherein the computer program, when run by a device, enables the device to perform the method as claimed in any one of claims 1 to 67.

74. A computer program product, comprising computer program instructions, wherein the computer program instructions enable a computer to perform the method as described in any one of claims 1 to 67.

75. A computer program, wherein the computer program enables a computer to perform the method as claimed in any one of claims 1 to 67.

76. A communication system, comprising:
a terminal device, configured to perform the method as described in any one of claims 1 to 37; and
a network device, configured to perform the method as described in any one of claims 38 to 67.
